(19) Europäisches Patentamt
European Patent Office
Office européen des brevets

(11) **EP 4 742 109 A1**

(12) **EUROPEAN PATENT APPLICATION**

(43) Date of publication:
**13.05.2026 Bulletin 2026/20**

(21) Application number: **24212217.4**

(22) Date of filing: **11.11.2024**

(51) International Patent Classification (IPC):
**G06N 10/20** (2022.01)  **G06N 10/40** (2022.01)
**G06N 10/70** (2022.01)

(52) Cooperative Patent Classification (CPC):
**G06N 10/20; G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **PlanQC GmbH**
**85748 Garching (DE)**

(72) Inventors:
• **GIUDICI, Giuliano**
**6020 Innsbruck (AT)**
• **VERONI, Stefano**
**80801 Garching (DE)**
• **GIUDICE, Giacomo**
**80801 Garching (DE)**
• **PICHLER, Hannes**
**6020 Innsbruck (AT)**
• **ZEIHER, Johannes**
**85748 Garching (DE)**

(74) Representative: **Bardehle Pagenberg**
**Partnerschaft mbB**
**Patentanwälte Rechtsanwälte**
**Prinzregentenplatz 7**
**81675 München (DE)**

(54) **FAST AND HIGH-FIDELITY QUANTUM GATES USING DIPOLE-DIPOLE INTERACTIONS**

(57)    The present disclosure relates to an apparatus for performing a quantum gate on a pair of atomic particles in a quantum register, comprising: a laser source, a microwave source, a set of optical elements configured to direct laser radiation generated by the laser source onto the pair of atomic particles, a microwave antenna, coupled to the microwave source, and configured to illuminate the pair of atomic particles with microwave radiation generated by the microwave source, wherein the microwave source is configured to control a duration, an intensity, a detuning and / or a phase of the microwave radiation, a laser modulator configured to control a duration, an intensity, a detuning and / or a phase of the laser radiation directed to the pair of atomic particles, and a control unit configured to control the laser modulator and the microwave source to illuminate the pair of atomic particles with modulated laser radiation and modulated microwave radiation to perform the quantum gate on the pair of atomic particles.

**Fig. 1**

Processed by Luminess, 75001 PARIS (FR)

**Description**

## FIELD OF INVENTION

The present disclosure relates to methods and devices for performing fast, high-fidelity, and robust quantum gates on atomic particles, such as neutral atoms, using radiation induced dipole-dipole interactions between pairs of atomic particles.

## INTRODUCTION

The ability to perform high-fidelity quantum gates in a fast and robust manner is a key requirement for building useful quantum computing devices. As known in the art, the computational advantage provided by quantum computing devices as compared to classical computers may be limited by the fidelity, speed and / or robustness of individual quantum gates. A sequence of an arbitrary number of such gates may implement a quantum algorithm. Such quantum gates generally act on a plurality of qubits of a quantum register. Such quantum registers may be realized, for instance, by trapping, inside a vacuum chamber, neutral atoms (such as rubidium, cesium, strontium or ytterbium atoms, etc.) or other types of atomic particles (molecules, ions, etc.) in arrays of optical tweezer traps or optical lattices or combinations thereof. Typically, realizing quantum gates for a group of two or more qubits requires interactions between qubits. For example, such interactions may be engineered using Rydberg states of neutral atoms (see e.g.: L. Henrit et al: Quantum computing with neutral atoms, Quantum 4, 327 (2020)).

Neutral atom quantum registers provide long coherence times, scalability and reconfigurable geometries for realizing arbitrary interaction connectivity between the qubits of the quantum register. For example, two-qubit quantum gates involving Rydberg states and van der Waals interactions have been experimentally realized using rubidium atoms (see S. J. Evered et al., High-fidelity parallel entangling gates on a neutral-atom quantum computer, Nature 622, pp. 268-272), achieving up to 99.5% gate fidelity. There remains a perpetual need for improving fidelity, speed and / or the robustness of two-qubit quantum gates for atomic particles.

## SUMMARY

Realizing two-qubit gates for a pair of atomic particles typically includes coupling internal states of the atomic particles to a Rydberg level via electromagnetic radiation (such as laser radiation) such that the pair of atomic particles can interact with each other through van der Waals forces. The length scale or effective range of this interaction is typically on the same order as the physical distance between the pair of atomic particles in a typical quantum register e.g., formed by trapping the atomic particles in an optical lattice or an optical tweezer trap array. Parameters of such electromagnetic radiation (e.g., duration, amplitude, frequency, phase, etc.), may be modulated in time in such a way that the desired two-qubit gate operation is realized. The modulation required to achieve the desired two-qubit gate is not unique, providing a degree of freedom that can be exploited to minimize execution time of the quantum gate and / or to maximize fidelity and / or the robustness of the quantum gate against, for instance, experimental imperfections, such as fluctuations of the intensity of the electromagnetic radiation. Fast execution times can be particularly relevant as the finite lifetime of the Rydberg state involved in the scheme above is considered a major source of decoherence that may lead to undesirable errors in the quantum computation.

The fidelity of quantum gates may be limited, inter alia, by the finite lifetime of the Rydberg states involved in mediating the van der Waals interactions between the atomic particles. Thus, reducing the execution time of a quantum gate can benefit its fidelity. Minimizing the quantum gate execution time may be facilitated by a large interacting strength. Further, the fidelity of the quantum gate may also depend on how robust execution of the quantum gate is to small variations in gate execution parameters, including but not limited to the amplitude and the phase of the electromagnetic radiation as well as the distance between the two atomic particles. Such variations may be caused by the unstable environmentally conditions, such that mitigating and / or compensating them during gate execution may be preferred over determining and eliminating their sources. Thus, reducing the sensitivity of the quantum gate fidelity to the gate execution parameters may benefit the experimental fidelity of the quantum gate.

To improve speed, fidelity and / or robustness of multi qubit gates the present disclosure provides, inter alia, a method for performing a quantum gate on a pair of atomic particles according to claim 1, an apparatus for performing a quantum gate on a pair of atomic particles in a quantum register according to claim 10, a related method for quantum computing according to claim 12, and a neutral atom quantum computer according to claim 15. The corresponding dependent claims relate to further aspects of exemplary and / or advantageous implementations.

In some implementations, the atomic particles may be neutral atoms, such as cesium, rubidium, strontium or ytterbium atoms. The neutral atoms may be part of a plurality of neutral atoms trapped in a plurality of optical tweezer traps or in an optical lattice or similar particle trap thereby forming a quantum register. The quantum register may be part of a quantum computing apparatus configured to execute quantum computing algorithms by performing a sequence of quantum gate operations on selected subgroups of atomic particles in the quantum register.

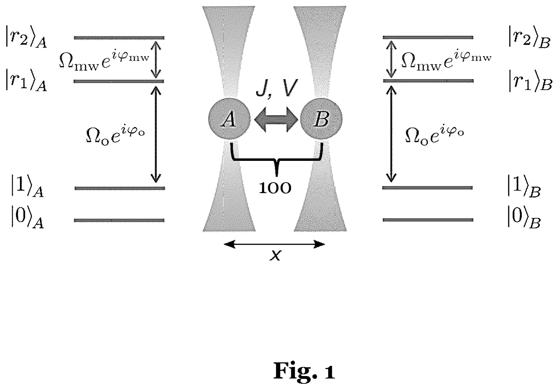

In some implementations, each of the pair of atomic particles may comprise two internal states that may serve as qubit states $|0\rangle$ and $|1\rangle$ and a pair of Rydberg states $|r_1\rangle$ and $|r_2\rangle$ (see **Fig. 1).** An exemplary Hamiltonian H(t) describing such a two-qubit system in presence of the first and the second electromagnetic radiation may read as follows:

$$\frac{H(t)}{\hbar} = \frac{\Omega_0(t)}{2}\left(e^{i\,\phi_0(t)}\,|1\rangle\langle r_1|_A + e^{i\,\phi_0(t)}|1\rangle\langle r_1|_B + h.\,c.\right)$$

$$+ \frac{\Omega_{mw}(t)}{2}\left(e^{i\,\phi_{mw}(t)}\,|r_1\rangle\langle r_2|_A + e^{i\,\phi_{mw}(t)}|r_1\rangle\langle r_2|_B + h.\,c.\right)$$

$$+ J\,(|r_1 r_2\rangle\langle r_2 r_1|) + V_{vdW}\sum_{i,j=1}^{2} V_{ij}|r_i r_j\rangle\langle r_i r_j|,$$

$$(1)$$

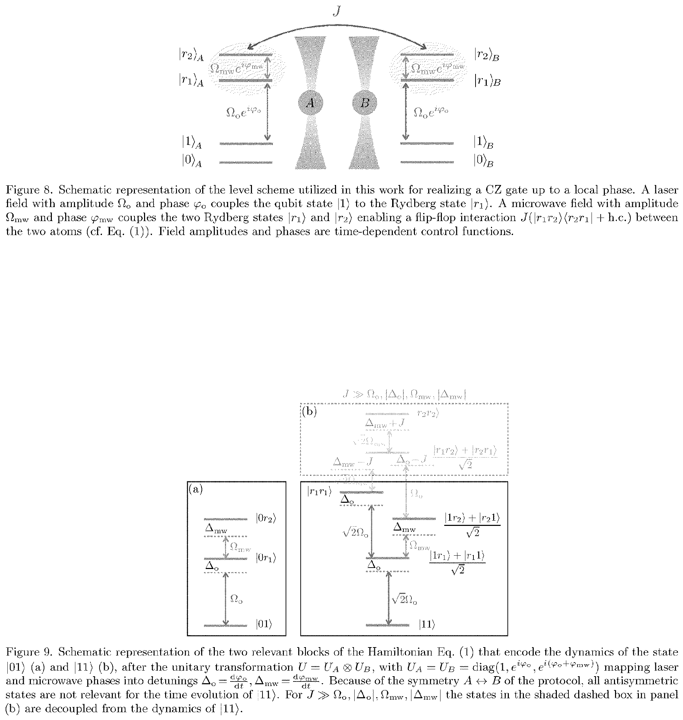

where A and B in the subscript of a state $|...\rangle$ or $\langle...|$ indicate that the state belongs to particle A and B. Further, $\Omega_0(t)$ and $\phi_0(t)$ denote the time-dependent amplitude (e.g., expressed as a Rabi-frequency) and the time-dependent phase of the laser radiation, respectively, which couples the qubit state $|1\rangle$ to the Rydberg state $|r_1\rangle$. Similarly, $\Omega_{mw}(t)$ and $\phi_{mw}(t)$ denote the amplitude and phase of the microwave radiation, respectively, which couples the two Rydberg states $|r_1\rangle$ and $|r_2\rangle$ of each atomic particle. J denotes the strength of the dipole-dipole interaction, also known as dipolar exchange interaction, and V denotes the strength of the van der Waals interactions. As described herein the induced dipole-dipole interaction between the atomic particles can be used for realizing improved two-qubit gates. In some configurations, non-negligible van der Waals interactions may also be present and may have to be taken into account when designing pulse modulation protocols for two-qubit quantum gates with high fidelity, speed and robustness that are enabled by the induced dipole-dipole interaction. Further details are discussed in G. Giudici et al. Fast entangling gates for Rydberg atoms via resonant dipole-dipole interaction (submitted on 7 Nov 2024 and published on 11 Nov 2024 as arXiv:2411.05073 [quant-ph]) included herein as **Supplement A** with reference to Fig. 8 to Fig. 16.

In some implementations, a desired two-qubit gate to be realized based on induced dipole-dipole interactions may be a controlled-Z (CZ) entangling gate parametrized by an angle $\theta$. In the two-qubit basis $\{|00\rangle,|01\rangle,|10\rangle,|11\rangle\}$ such a gate operation can be defined as:

$$CZ(\theta) = \text{diag}(1, e^{i\theta}, e^{i\theta}, -e^{i2\theta})$$

Such a CZ entangling gate may be realized using a sequence of pulses of electromagnetic radiation directed at the pair of atomic particles, comprising, for example, both laser and microwave radiation. In some implementations, radiation pulses delivering the first and the second electromagnetic radiation to the pair of atomic particles may be applied at least in part simultaneously. An exemplary protocol may involve two pulses of electromagnetic radiation, one comprising laser radiation coupling the first qubit state $|1\rangle$ to a first Rydberg state $|r_1\rangle$, the other comprising microwave radiation coupling the two Rydberg states $|r_1\rangle$ and $|r_2\rangle$. Both pulses may have the same duration (the gate execution time) and overlap completely in time. In other implementations the pulses may have different durations and / or may overlap partially in time.

Such a protocol may realize a CZ gate up to a single-qubit phase shift. This may be seen from, without loss of generality, from the Hamiltonian in Eq. (1) in a limit of strong dipolar interactions (*e.g.,* $J \gg \Omega_0, |\Delta_0|, \Omega_{mw}, |\Delta_{mw}|$), strong microwave detuning (e.g., $\Delta_{mw} \gg \Omega_0, \Delta_0, \Omega_{mw}$) and without considering, for ease of analysis, van der Waals interactions (V = 0). The Hamiltonian of Eq. 1 may then by simplified to:

$$\frac{H(t)}{\hbar} = \frac{\Omega_0}{2}\,(\,|1\rangle\langle r|_A + |1\rangle\langle r|_B + h.\,c.\,) - \Delta(t)(\,|r\rangle\langle r|_A + |r\rangle\langle r|_B) + W(t)|rr\rangle\langle rr|,$$

$$(2)$$

where $W(t) = -\frac{\Delta_{mw}(t)}{2\,\Omega^2_{mw}(t)}$ is an effective interaction strength of a van der Waals type and

$\Delta(t) = \Delta_0(t) - \frac{4\,\Omega^2_{mw}(t)}{\Delta_{mw}(t)}$ is the detuning of an effective electromagnetic radiation (combining the two pulses described above).

Both, $W(t)$ and $\Delta(t)$ may depend on the amplitude $\Omega_{mw}$ and the detuning $\Delta_{mw}$ of the microwave radiation. Eq. 2 can describe a system comprising two qubits interacting with each other through van der Waals forces and can be used to engineer a two-qubit CZ entangling gate, as described in, for example, H. Levine et al., Parallel Implementation of High-Fidelity Multiqubit Gates with Neutral Atoms, PRL 123, 170503 ff.

Generally, realizing a two-qubit quantum gate with optimal fidelity may be achieved by determining an optimal pulse duration of each pulse and / or an optimal modulation of pulse parameters by numerical optimization procedures. This allows to implement fast, robust and high-fidelity gates also in less ideal situations, e.g., in presence of non-negligible van der Waals interactions between the pair of atomic particles. Pulse parameters to be modulated may include radiation intensity, phase and a detuning of the electromagnetic radiation (with respect to the relevant atomic transition frequencies) delivered by the radiation pulses.

In such a scenario, achieving the highest possible quantum gate fidelity may require optimizing the pulse duration and modulating several pulse parameters. For example, the gate fidelity may be defined as a Bell state fidelity:

$$F_{Bell} = \left| \langle \psi_\theta | texp \left( -\frac{i}{\hbar} \int_0^T H(t)dt \right) | + + \rangle \right|^2, \text{where}$$

$$(3)$$

$|\psi_\theta\rangle = \frac{1}{2}(\,|00\rangle + e^{i\theta}|01\rangle + e^{i\theta}|10\rangle - e^{2i\theta}|11\rangle)$ is a Bell state that can be obtained when applying the CZ quantum gate to a product state $|+ +\rangle$ as known in the art (see for example M.A. Nielsen and I.L. Chuang: *Quantum Computing and Quantum Information*). Eq. 3 allows to define a *cost function* that may be used for numerical pulse parameter optimization as discussed in more detail below and in Supplement A. For example, the following cost function C may be defined:

$$C = 1 - F_{Bell},$$

$$(4)$$

This cost function or a similar one may be minimized by determining an optimal modulation of the pulse parameters, such as $\Omega_0(t)$, $\phi_0(t)$, $\Omega_{mw}(t)$ and $\phi_{mw}(t)$ for a set of pulse durations. Depending on the application scenario and the required gate performance, the Hamiltonian H(t) used in Eq. 3 may be the Hamiltonian H(t) of Eq. (1) or a suitable and simpler approximation that may be used to speed-up convergence of the numerical optimization procedure.

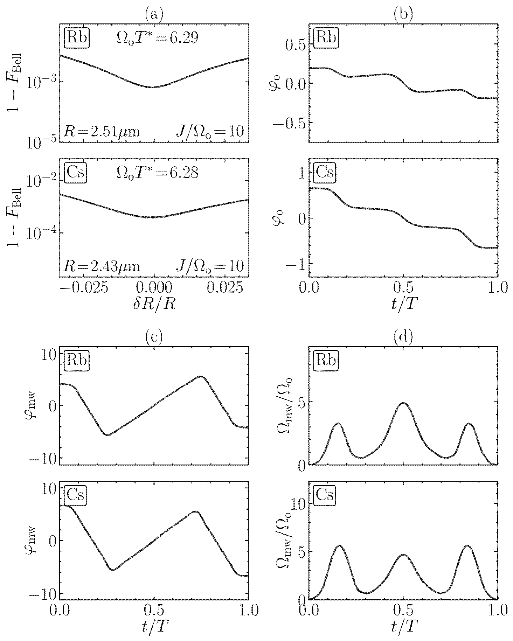

In some implementations, determining such time-dependent pulse parameters may comprise utilizing optimal control computational methods, such as Gradient Ascent Pulse Engineering, GRAPE, as detailed in, for example, B. Riaz, Optimal control methods for quantum gate preparation: a comparative study, Quantum Inf. Process. 18, 100, (Fig. 2 for details). After determining the duration of each pulse as well as its modulation parameters, the electromagnetic radiation may be modulated and shaped based on the determined modulation parameters and duration, such that the two-qubit gate is executed with optimized fidelity, speed and / or robustness. In this way, the negative impact of van der Waals interactions on the fidelity of the two-qubit quantum gate may be mitigated by finding optimal time-dependent parameters for the pulses delivering the laser and the microwave radiation to the two-qubit system.

In some implementations, determining the optimal modulation of the pulse parameters may also comprise maximizing the robustness of the quantum gate against fluctuations, such as inter-particle distance fluctuations of the two atomic particles. For example, in a quantum register comprising a plurality of neutral atoms trapped in optical tweezer traps, the position of the tweezer traps, and, therefore, the distances in between the atoms, might fluctuate e.g., due to mechanical vibrations or trap laser instabilities. In addition, each atomic particle may not occupy the motional ground state of its trap. As a consequence, the position of the atomic particle in the trap is subject to thermal fluctuations. Such fluctuations in the distance between the two atomic particles may lead to fluctuations of the dipole-dipole interaction strength $J$ and the van der Waals interaction strength $V$, since both interaction strengths depend on the distance between the two atomic particles. As a consequence, the fidelity of the quantum gate may be diminished as the interaction strength may not retain a constant value throughout the gate execution time.

In order to take such fluctuations into account while determining the optimal time-dependent parameters of each radiation pulse, the cost function in Eq. (4) may be replaced by

$$C = 1 - \frac{1}{2\,x_M} \int_{-x_M}^{x_M} dx\, F_{Bell}(x)\,,$$

$$(5)$$

Where $x_M$ designates the maximum fluctuation of the distance between the two particles and $F_{Bell}(x)$ is the Bell fidelity obtained for the interaction strengths $J$ and $V$ governing the dynamics for the distance $x$. The second term in Eq. (5) may express a fidelity averaged over the inter-atomic distance within a typical range of distance fluctuations. Next, the optimal duration and modulation of the pulses may be determined, based on the cost function C of Eq. 5 as described above and in more detail in section IV and section V of Supplement A.

Further details of the aspects described generally above are discussed in the following with reference to exemplary implementations illustrated by the drawings. The foregoing broadly outlines the features and technical advantages of examples in accordance with the present disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying drawings. Each of the drawings is provided for the purposes of illustration and description, and not as a definition of the limits of the claims.

## BRIEF DESCRIPTION OF THE DRAWINGS

**Fig. 1** illustrates an exemplary system comprising two atomic particles for performing a quantum gate utilizing dipole-dipole interactions according to an exemplary implementation of the present disclosure.

**Fig. 2** shows an exemplary result of determining the optimal modulation of the pulses delivering a first and a second electromagnetic radiation to the two atomic particles for realizing a quantum gate according to an exemplary implementation of the present disclosure.

**Fig. 3** illustrates a method for performing a quantum gate on a pair of atomic particles according to aspects of the present disclosure.

**Fig. 4** illustrates a method for quantum computing according to aspects of the present disclosure, e.g. by using an apparatus as described herein.

**Fig. 5** illustrates a block diagram of an exemplary quantum computing device according to a possible implementation of the present disclosure.

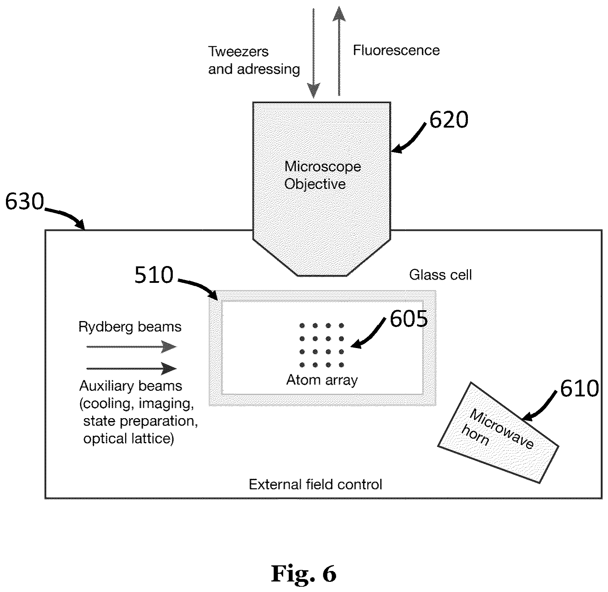

**Fig. 6** illustrates several components of a neutral atom quantum computing device according to a possible implementation of the present disclosure.

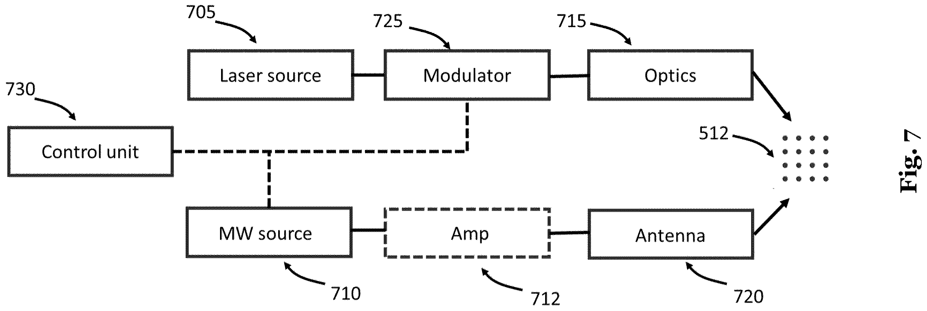

**Fig. 7** illustrates a block diagram of an exemplary apparatus for performing a quantum gate on a pair of atomic particles according to aspects of the present disclosure.

**Fig. 8** to **Fig. 16** refer to **Supplement A.**

## DETAILED DESCRIPTION OF EXEMPLARY EMBODIMENTS

Various aspects of the present disclosure are described in more detail hereinafter with reference to the accompanying drawings. The present disclosure may, however, be implemented in many different forms and should not be construed as limited to any specific structure or function presented herein. Rather, these aspects are provided so that this disclosure will be thorough and complete, and will fully convey the scope of the present disclosure to those skilled in the art. Based on the teachings herein one skilled in the art should appreciate that the scope of the present disclosure is intended to cover any aspect of the present disclosure disclosed herein, whether implemented independently of or combined with any other aspect of the present disclosure. For example, an apparatus, a device or a system may be implemented, or a method may be practiced using any number of the aspects set forth herein. In addition, the scope of the present disclosure is intended to cover such a device, apparatus, system or method which is practiced using other structure, functionality, or structure and functionality in addition to or other than the various aspects of the present disclosure set forth herein. Any aspect of the present disclosure disclosed herein may be implemented by one or more elements of a claim. While specific feature combinations are described in the following with respect to certain aspects of the present disclosure, it is to be understood that not all features of the discussed examples must be present for realizing the technical advantages of the devices, apparatuses, systems, methods and computer programs disclosed herein. Disclosed aspects may be modified by combining certain features of one aspect with one or more features of other aspects. A skilled person will understand that features, steps, components and / or functional elements of one aspect can be combined with compatible features, steps, components and / or functional elements of any other aspect of the present disclosure.

Several aspects of trapping and manipulating (e.g., imaging, gate operations, spectroscopy, etc.) atomic particles will now be presented with reference to various devices, apparatuses, systems and methods that are described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware and/or software depends upon the particular application and design constraints imposed on the overall system. Further, the apparatuses and methods disclosed herein can be part of complex quantum technology systems such as neutral atom quantum computers. The skilled person will appreciate that in the following several components of such systems, such as certain laser sources, specifics of experiment control and timing units, optical setups, etc. may not explicitly be described.

**FIG. 1** illustrates an exemplary system comprising a pair of atomic particles 100 that may be used as qubits for performing a quantum entangling gate utilizing dipole-dipole interactions. The two qubits, labelled A and B, are located at a distance x away from each other. Each atomic particle qubit has an internal level structure comprising four energy levels: the qubit states, designated by $|0\rangle$ and 11), and two Rydberg states, designated as $|r_1\rangle$ and $|r_2\rangle$ used for inducing the dipole-dipole interaction. The system of two qubits may be illuminated by laser radiation and microwave radiation. The laser radiation has an amplitude of $\Omega_0$ and a phase of $\phi_0$ and may couple one of the qubit states, possibly $|1\rangle$, to one of the Rydberg states, possibly $|r_1\rangle$. The microwave radiation has an amplitude of $\Omega_{mw}$ and a phase of $\phi_{mw}$ and may couple the two Rydberg states $|r_1\rangle$ and $|r_2\rangle$. As a consequence of the illumination, the two qubits may interact with each other through dipole-dipole interactions of strength $J(x)$ and $V(x)$ and van der Waal interactions of strength $V(x)$, both of which may depend on the physical distance x between the two qubits. The two-qubit system depicted in Fig. 1 may be described by the Hamiltonian in Eq. 1 or similar that may be used for numerically optimizing pulse parameters of the laser and microwave radiation used for performing the two-qubit gate of the pair of atomic particles.

**FIG. 2** illustrates exemplary results of determining the optimal (time-dependent) parameters of the pulses delivering laser and / or microwave radiation to the two atomic particles for realizing a quantum gate. The determination of optimal parameters comprises determining the duration of each pulse $T$ as well as its time-dependent parameters, possibly including amplitude ($\Omega_0(t)$ and / or $\Omega_{mw}(t)$), phase ($\phi_0(t)$ and / or $\phi_{mw}(t)$) and detuning ($\phi_0(t)$ and / or $\phi_{mw}(t)$). The result of this determination is then used for modulating the pulses based on the determined time-dependent parameters, such that the interactions between the two atomic particles realize a desired quantum gate operation. In each of the panels **(a) - (d)** the top part shows the result obtained for neutral cesium atoms and the bottom part for neutral rubidium atoms.

Panel **(a)** shows an infidelity (defined as 1 - $F_{Bell}$) as a function of the relative fluctuation $\delta R / R$ in the interatomic distance $R$, illustrating how the quantum gate fidelity may vary with the interatomic distance since as described above the inter-atomic interactions (dipole-dipole and / or van der Walls) depends on the interatomic distance. The presence of atomic distance fluctuations may be taken into account by a suitable pulse parameter optimization procedure based on, for example, the cost function in Eq. 5.

Panel **(b)** shows the optimized phase of the laser radiation $\phi_0$ as a function of time $t$, normalized with respect to the optimal gate duration $T = T^*$.

Panel **(c)** shows the optimized phase of the microwave radiation $\phi_{mw}$ as a function of time $t$, normalized with respect to the optimal gate duration $T = T^*$.

Panel **(d)** shows the optimized ratio $\Omega_{mw} /$ between the amplitude of the microwave radiation and the amplitude of the laser radiation as a function of time $t$, normalized with respect to the optimal gate duration $T = T^*$.

The optimal pulse parameters shown in panels (a)-(d) may then be used to realize a quantum gate with the highest possible fidelity, robustness, and speed.

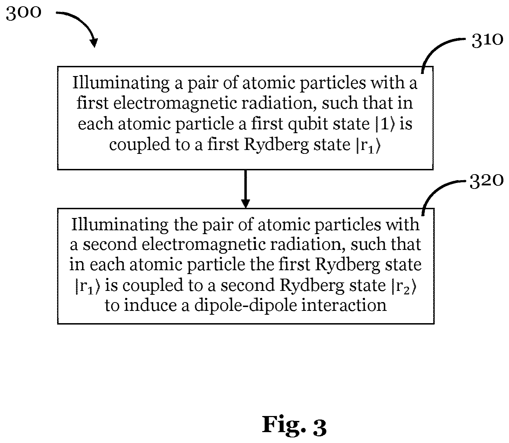

**FIG. 3** illustrates a method for performing a quantum gate on a pair of qubits (for example, neutral atoms including cesium, rubidium, strontium and rubidium atoms), comprising: illuminating the qubits with laser radiation, such that in each qubit a first qubit state $|1\rangle$ is coupled to a first Rydberg state $|r_1\rangle$. The method further comprises illuminating the qubits with microwave radiation, such that in each qubit the first Rydberg state $|r_1\rangle$ is coupled to a second Rydberg state $|r_2\rangle$, such that a dipole-dipole interaction between the two qubits is induced.

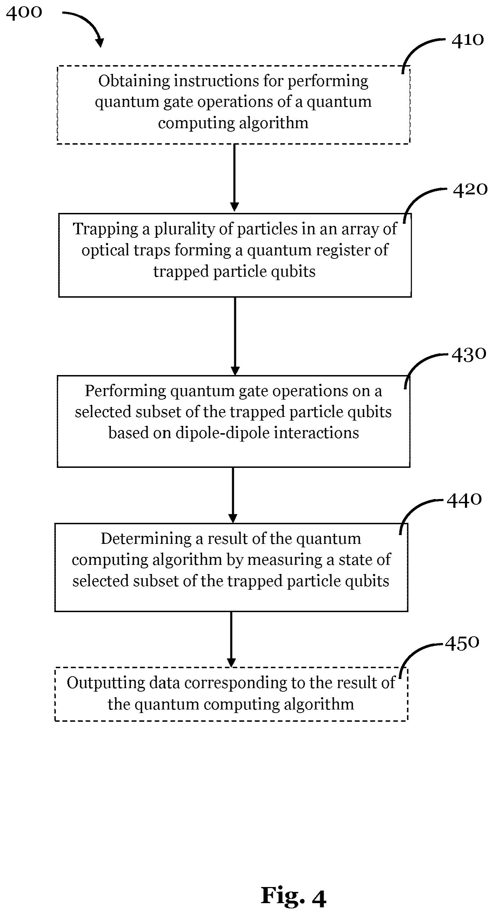

**FIG. 4** illustrates a method for quantum computing, comprising, optionally, obtaining 410 a set of instructions for performing the set of quantum gate operations on the selected subset of the trapped particle qubits of the quantum register, and trapping 420 a plurality of particles in an array of optical traps forming a quantum register of trapped particle qubits, and performing 430 a set of quantum gate operations of a quantum computing algorithm on a selected subset of trapped particle qubits by manipulating an internal and / or a motional state of the selected subset of trapped particle qubits. The method further comprises determining 440 a result of the quantum computing algorithm by measuring a state of the selected subset of trapped particle qubits, and, optionally, outputting 450 data corresponding to the result of the quantum computing algorithm.

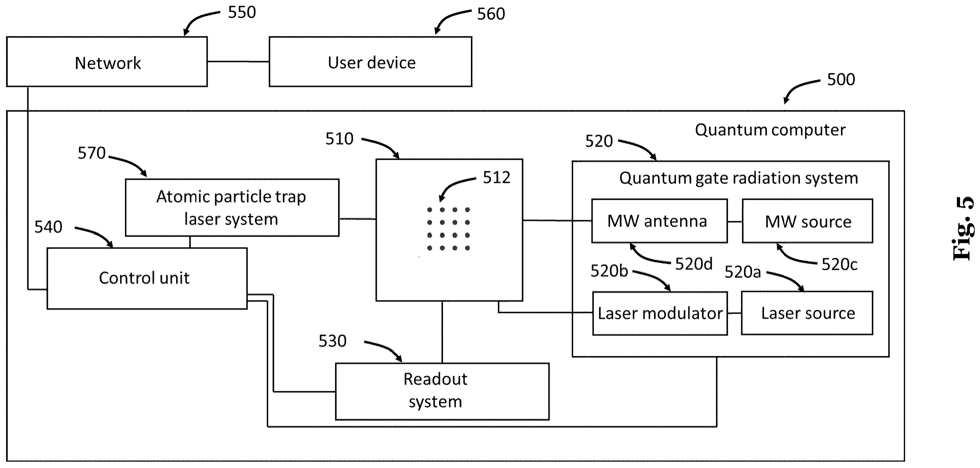

**FIG. 5** shows a typical implementation of a quantum computer 500 comprising a quantum register 510, e.g. formed by a plurality of trapped particles, and a quantum gate laser system 520. In some implementations, the quantum computer can be controlled by a (remote) user device 560, possibly via a network 550. In some implementations, the quantum gate laser system 520 may be configured to create plurality of trapped particles and / or manipulate and/or cause a controlled quantum state evolution of one or more atomic objects within the quantum register 510. For example, the quantum gate laser system 520 may comprise one or more lasers, which provide one or more laser beams to atomic objects (such as neutral atoms, molecules or ions) in the quantum register 510.

Ins some implementations, the quantum gate laser system 520 may comprise a laser source 520a, a laser modulator 520b, a microwave source 520c and a microwave antenna 520d. The quantum gate laser system may further comprise a set of optical elements configured to direct laser radiation generated by the laser source onto the the pair of atomic particles in the quantum register 510. The microwave source 520c may be configured such that a duration, an intensity, a detuning and a phase of the microwave radiation is controllable. The laser source 520a may be configured such that a duration, an intensity, a detuning and a phase of the laser radiation is controllable.

In some implementations, the qubit state readout system may be configured to collect and/or detect photons generated by qubits (e.g., during reading procedures). The optics collection system may comprise one or more optical elements (e.g., lenses, mirrors, waveguides, fiber optics cables, and/or the like) and one or more photodetectors. In various embodiments, the photodetectors may be photodiodes, photomultipliers, charge-coupled device (CCD) sensors, complementary metal oxide semiconductor (CMOS) sensors, Micro-Electro-Mechanical Systems (MEMS) sensors, and/or other photodetectors that are sensitive to light at an expected fluorescence wavelength of the qubits of the quantum computer. In various embodiments, the detectors may be in electronic communication with the processing and control circuitry 640.

In some implementations, the user device 560 is configured to allow a user to provide input to the quantum computer 500 and receive, view, and/or the like output from the quantum computer 500. The user device may be in communication with the processing and control circuitry 540 of the quantum computer 500 via one or more wired or wireless networks 560 and/or via direct wired and/or wireless communications. In an example embodiment, the user device 550 may translate, configure, format, and/or the like information/data, quantum computing algorithms and/or circuits, and/or the like into a computing language, executable instructions, command sets, and/or the like that the processing and control circuitry 540 can understand and/or implement.

In some implementations, the processing and control circuitry 540 may be configured to control, inter alia, the quantum gate laser system 520 and / or the qubit state readout system 530. For example, the processing and control circuitry 540 may be configured to cause a controlled evolution of quantum states of one or more atomic objects within the quantum register 510 to execute a quantum circuit and/or algorithm. For example, the processing and control circuitry 540 may cause a reading procedure comprising, possibly as part of executing a quantum circuit and/or algorithm. In various embodiments, the atomic objects confined within the quantum register 510 are used as qubits of the quantum computer 500.

The foregoing disclosure provides illustration and description but is not intended to be exhaustive or to limit the aspects to the precise form disclosed. Modifications and variations may be made in light of the above disclosure or may be acquired from practice of the aspects. As used herein, the term component is intended to be broadly construed as hardware, firmware, or a combination of hardware and software. As used herein, a processor is implemented in hardware, firmware, or a combination of hardware and software.

It will be apparent that systems and/or methods described herein may be implemented in different forms of hardware, firmware, or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of various aspects. In fact, many of these features may be combined in ways not specifically recited in the claims and/or dis-closed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchange-ably with "one or more." Where only one item is intended, the phrase "only one" or similar language is used. Also, as used herein, the terms "has," "have," "having," and/or the like are intended to be open-ended terms.

As used herein, the phrase "based on" shall not be construed as a reference to a closed set of information, one or more conditions, one or more factors, or the like. In other words, the phrase "based on A" (where "A" may be information, a condition, a factor, or the like) shall be construed as "based at least on A" unless specifically recited differently.

As used herein, the term "or" is an inclusive "or" unless limiting language is used relative to the alternatives listed. For example, reference to "X being based on A or B" shall be construed as including within its scope X being based on A, X being based on B, and X being based on A and B. In this regard, reference to "X being based on A or B" refers to "at least one of A or B" or "one or more of A or B" due to "or" being inclusive. Similarly, reference to "X being based on A, B, or C" shall be construed as including within its scope X being based on A, X being based on B, X being based on C, X being based on A and B, X being based on A and C, X being based on B and C, and X being based on A, B, and C. In this regard, reference to "X being based on A, B, or C" refers to "at least one of A, B, or C" or "one or more of A, B, or C" due to "or" being inclusive. As an example of limiting language, reference to "X being based on only one of A or B" shall be construed as including within its scope X being based on A as well as X being based on B, but not X being based on A and B.

Further, process diagrams such as Fig. 3, and Fig. 4 do not necessarily indicate a particular order or sequence of steps. For example, steps may also be performed in a different order or, if hardware capabilities allow it, simultaneously, without deviating from the scope of the present disclosure.

Further details of the aspects described above are in Supplement A making reference to Figs. 8 to 16 As will be apparent to the person skilled in the art, Supplement A is a scientific publication that is based on and / or makes use of several aspects of the present disclosure. Details and examples provided in Supplement A are included for easy of understanding and thus not to be understood to be limiting in any way to what was described above. For instance, aspects of the present disclosure discussed above may also be implemented using alkaline-earth atoms such as $^{88}$Sr. Further, as will also be appreciated by the skilled person, terminology used in Supplement A might, in some cases, be different from the terminology used above.

**Fig. 8** shows a schematic representation of an exemplary atomic level scheme utilized in this disclosure for realizing a CZ gate up to a local phase. A laser field with amplitude $\Omega_o$ and phase $\varphi o$ couples the qubit state $|1\rangle$ to the Rydberg state $|r_1\rangle$. A microwave field with amplitude $\Omega_{mw}$ and phase $\varphi mw$ couples the two Rydberg states $|r_1\rangle$ and $|r_2\rangle$ enabling a flip-flop interaction $J(|r_1 r_2\rangle\langle r_2 r_1| + h.c.)$ between the two atoms (cf. Eq. (1) in Supplement A). Field amplitudes and phases are time-dependent control functions.

**Fig. 9** shows a schematic representation of two relevant blocks of the Hamiltonian of Eq. (1) that encode the dynamics of the state $|01\rangle$ (panel (a)) and $|11\rangle$ (panel (b)), after the unitary transformation U = UA ⊗ UB, with UA = UB = diag(1, $e^{i\varphi o}$, $e^{i(\varphi o+\varphi mw)}$ ) mapping laser and microwave phases into detunings $\Delta_o = d\varphi_o / dt$ , $\Delta_{mw} = d\varphi_{mw} /dt$ . Because of the symmetry A ↔ B of the protocol, all antisymmetric states are not relevant for the time evolution of $|11\rangle$. For $J \gg \Omega_o, |\Delta_o|$, $\Omega_{mw}, |\Delta_{mw}|$ the states in the shaded dashed box in panel (b) are decoupled from the dynamics of $|11\rangle$.

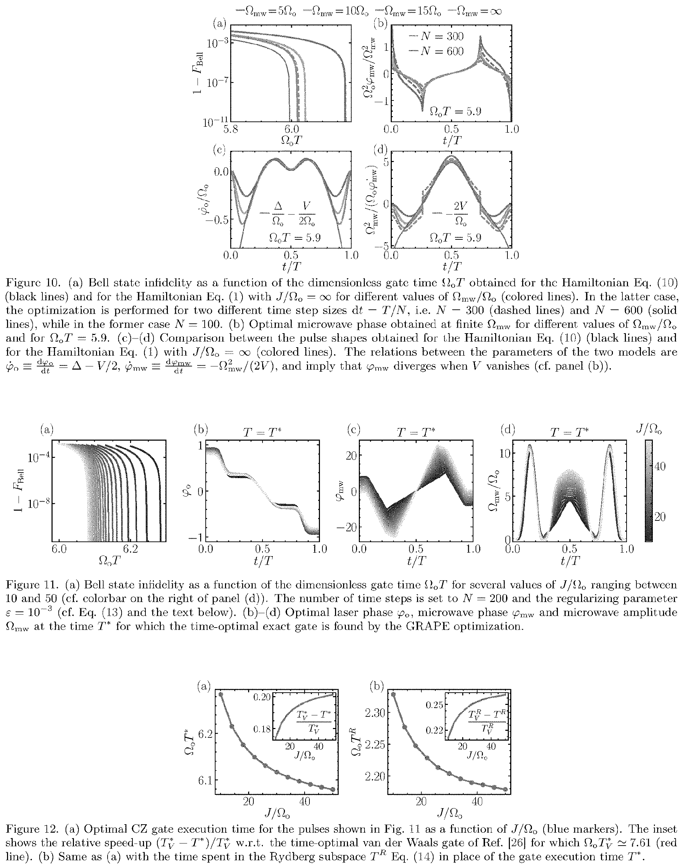

**Fig. 10** shows in panel (a) a Bell state infidelity as a function of the dimensionless gate time $\Omega_o T$ obtained for the Hamiltonian of Eq. (10) of Supplement A (solid lines) and for the Hamiltonian of Eq. (1) with $J/\Omega_o = \infty$ for different values of $\Omega_{mw}/\Omega_o$ (dashed lines). In the latter case, the optimization is performed for two different time step sizes dt = T /N, i.e. N = 300 (dashed lines) and N = 600 (solid lines), while in the former case N = 100. Panel (b) shows an optimal microwave phase obtained at finite $\Omega_{mw}$ for different values of $\Omega_{mw}/\Omega_o$ and for $\Omega_o T = 5.9$.

Panels (c) to (d) of Fig. 10 show a comparison between the pulse shapes obtained for the Hamiltonian of Eq. (10) (solid lines) and for the Hamiltonian Eq. (1) with $J/\Omega_o = \infty$ (dashed lines). The relations between the parameters of the two models are $d\varphi_o/dt = \Delta - V /2$, $d\varphi_{mw} / dt = -\Omega^2_{mw}/(2V)$, and imply that $\varphi_{mw}$ diverges when V vanishes (cf. panel (b)).

**Fig. 11** shows in panel (a) a Bell state infidelity as a function of the dimensionless gate time $\Omega_o T$ for several values of

$J/\Omega_o$ ranging between 10 and 50 (cf. bar on the right of panel (d)). The number of time steps is set to N = 200 and the regularizing parameter $\varepsilon = 10^{-3}$ (cf. Eq. (13) and the text below). Panels (b) to (d) show optimal laser phase $\varphi_o$, microwave phase $\varphi_{mw}$ and microwave amplitude $\Omega_{mw}$ at the time $T_*$ for which the time-optimal exact gate is found by the GRAPE optimization as described herein.

**Fig. 12** shows in panel (a) an optimal CZ gate execution time for the pulses shown in Fig. 11 as a function of $J/\Omega_o$ (markers). The inset shows the relative speed-up w.r.t. the time-optimal van der Waals gate of Ref. [26] for which $\Omega_o T^*_V \simeq 7.61$ (line). Panel (b) is the same as panel (a) with the time spent in the Rydberg subspace $T^R$ (see Eq. (14)) in place of the gate execution time $T_*$.

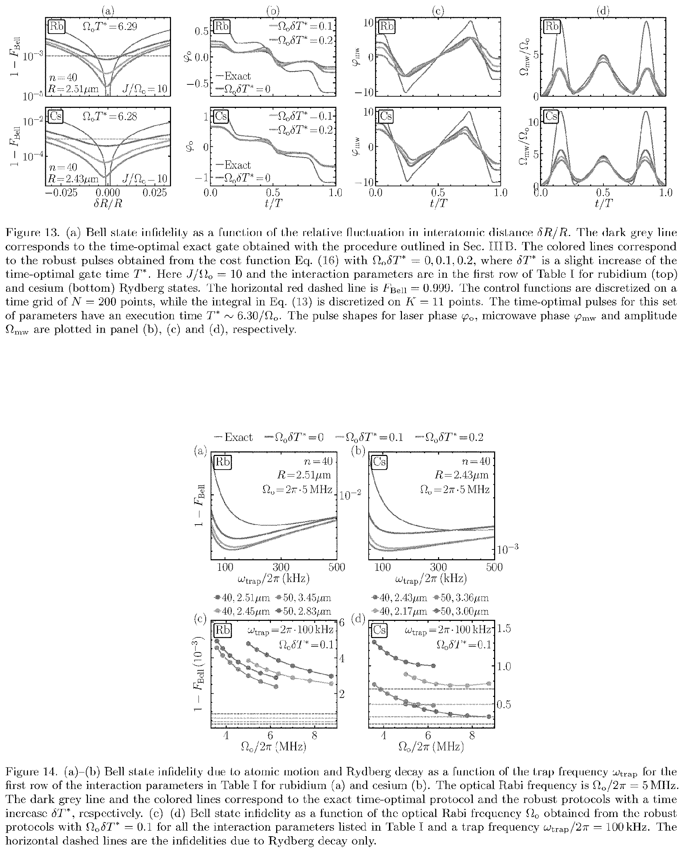

**Fig. 13** shows in panel (a) a Bell state infidelity as a function of the relative fluctuation in interatomic distance $\delta R/R$. The solid line corresponds to the time-optimal exact gate obtained with the procedure outlined in Sec. III B of Supplement A. The dashed lines correspond to the robust pulses obtained from the cost function of Eq. (16) with $\Omega_o \delta T^* = 0, 0.1, 0.2$, where $\delta T_*$ is a slight increase of the time-optimal gate time $T_*$. Here $J/\Omega_o = 10$ and the interaction parameters are in the first row of Table I for rubidium (top) and cesium (bottom) Rydberg states. The horizontal dashed line is $F_{Bell} = 0.999$. The control functions are discretized on a time grid of N = 200 points, while the integral in Eq. (13) is discretized on K = 11 points. The time-optimal pulses for this set of parameters have an execution time $T_* \sim 6.30/\Omega_o$. The pulse shapes for laser phase $\varphi_o$, microwave phase $\varphi_{mw}$ and amplitude $\Omega_{mw}$ are plotted in panel (b), (c) and (d), respectively.

**Fig. 14** shows in panels (a) to (b) a Bell state infidelity due to atomic motion and Rydberg decay as a function of the trap frequency $\omega_{trap}$ for the first row of the interaction parameters in Table I for rubidium (a) and cesium (b). The optical Rabi frequency is $\Omega_o/2\pi = 5$ MHz. The solid line and the dashed lines correspond to the exact time-optimal protocol and the robust protocols with a time increase $\delta T_*$, respectively. Panels (c) to (d) show a Bell state infidelity as a function of the optical Rabi frequency $\Omega_o$ obtained from the robust protocols with $\Omega_o \delta T_* = 0.1$ for all the interaction parameters listed in Table I and a trap frequency $\omega_{trap}/2\pi = 100$ kHz. The horizontal dashed lines are the infidelities due to Rydberg decay only.

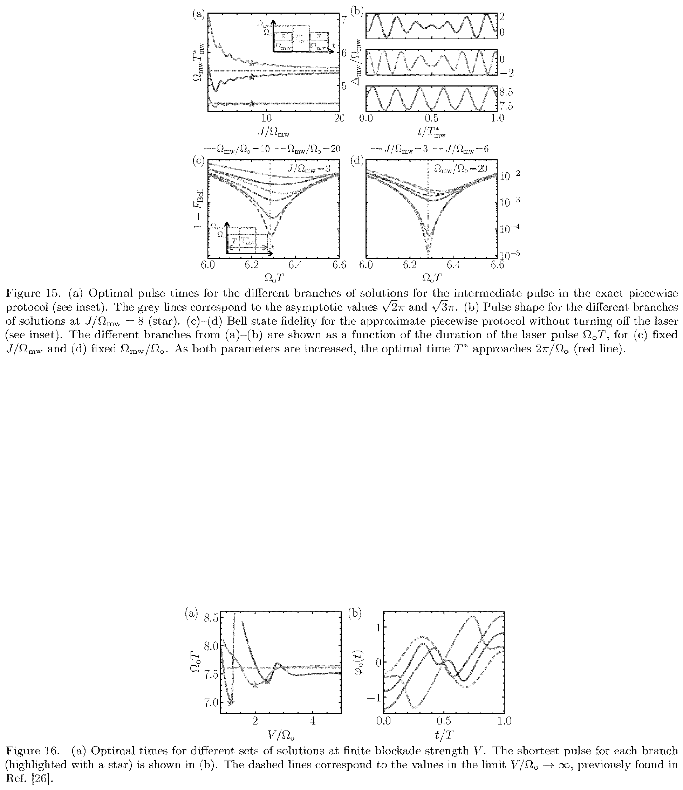

**Fig. 15** shows in panel (a) optimal pulse times for the different branches of solutions for the intermediate pulse in the exact piecewise protocol (see inset). The horizontal lines correspond to the asymptotic values $\sqrt{2}\pi$ and $\sqrt{3}\pi$. Panel (b) shows pulse shape for the different branches of solutions at $J/\Omega_{mw} = 8$ (star). Panels (c) to (d) shows a Bell state fidelity for the approximate piecewise protocol without turning off the laser (see inset). The different branches from panels (a) to (b) are shown as a function of the duration of the laser pulse area $\Omega_o T$, for panel (c) fixed $J/\Omega_{mw}$ and for panel (d) fixed $\Omega_{mw}/\Omega_o$. As both parameters are increased, the optimal time $T_*$ approaches $2\pi/\Omega_o$ (vertical line).

**Fig. 16** shows in panel (a) optimal times for different sets of solutions at finite blockade strength $V$. The shortest pulse for each branch (highlighted with a star) is shown in panel (b). The dashed horizontal line correspond to the values in the limit $V/\Omega_o \to \infty$, previously found in Ref. [26] of Supplement A.

The advent of digital neutral-atom quantum computers relies on the development of fast and robust protocols for high-fidelity quantum operations. In this work, we introduce a novel scheme for entangling gates using four atomic levels per atom: a ground state qubit and two Rydberg states. A laser field couples the qubit to one of the two Rydberg states, while a microwave field coupling the two Rydberg states enables a resonant dipole-dipole interaction between different atoms. We show that this interaction can mediate controlled-Z gates that are faster and less sensitive to Rydberg decay than state-of-the-art Rydberg gates based on van der Waals interactions. Moreover, we systematically stabilize our protocol against nteratomic distance fluctuations and analyze its performance in realistic setups with rubidium or cesium atoms. Our results open up new avenues to the use of dipolar interactions for universal quantum computation with neutral atoms.

## I. INTRODUCTION

The last decade has witnessed the rapid development of quantum platforms based on Rydberg atom arrays. In addition to their remarkable success as analog quantum simulators [1 4], neutral atoms trapped via optical tweezers or lattices are emerging as one of the most promising architectures for digital quantum computing, thanks to their scalability [5-7], their long coherence times [7-12], and their reconfigurable geometry that enables arbitrary qubit connectivity [8, 13]. High-fidelity single-qubit and two-qubit quantum operations have also been demonstrated with several atomic species, including rubidium [14, 15], cesium [16], strontium [17-20], and ytterbium [21-23]. Yet, further improving their accuracy remains one of the outstanding challenges toward realizing a large-scale, fault-tolerant quantum computer with neutral atoms, making it crucial to develop novel schemes for Rydberg gates.

Typically, two-qubit gates with Rydberg atoms rely on the strongly repulsive van der Waals force arising when the two atoms are in the same Rydberg state [15, 24-28]. The state-of-the-art approach for these schemes involves state-selectively coupling the atomic qubit of each atom to one Rydberg level via a laser, whose amplitude and phase are modulated in time to yield a controlled-Z (CZ) gate up to a local phase [25]. The phase and amplitude pulses required to achieve the desired two-qubit gate are not unique, providing a degree of freedom that can be exploited to minimize gate execution time [26] or maximize gate robustness against fluctuations in specific parameters [27, 29]. Time optimality is particularly relevant as the finite Rydberg lifetime is among the major sources of decoherence. Such protocols have been tested in a Rydberg array of rubidium atoms, achieving 99.5% gate fidelity [15], which is the most precise two-qubit quantum operation with neutral atoms to date.

Here, we present a different approach for realizing CZ Rydberg gates mediated by the resonant dipole-dipole interaction between pairs of distinct Rydberg levels $|r_1\rangle, |r_2\rangle$. Our scheme is depicted in Fig. 8: the atomic qubit state $|1\rangle$ is optically coupled to the Rydberg state $|r_1\rangle$, and $|r_1\rangle$ is microwave coupled to nearby Rydberg level $|r_2\rangle$, enabling a flip-flop interaction of strength $J$ between the two atoms [30]. A similar setup was considered in Ref. [31] to construct adiabatic gate protocols. The laser field can be configured as either global, to enable parallel gate operations, or local, to target individual pairs of atoms. We use laser and microwave amplitudes $\Omega_o$, $\Omega_{mw}$ and respective phases $\varphi_o$, $\varphi_{mw}$ as time-dependent control functions, and apply the Gradient Ascent Pulse Engineering (GRAPE) method [32-36] to obtain the time-optimal protocol for this scheme. We show that the resulting gate is 20% faster than the time-optimal "van der Waals protocol" put forward in Ref. [26], and offers several other advantages such as reduced sensitivity to Rydberg decay, increased interaction strengths for long-range gates, and the possibility to combine optical addressability and global microwave control. We give a physical interpretation of the numerically obtained pulses in a regime where the dipole-dipole interaction strength $J$ is much larger than all other energy scales, and find that the protocol can be formally interpreted as a reparametrization of the standard van der Waals protocol with time-dependent interaction strength. We then focus on realistic experimental conditions and develop a GRAPE-based method for further optimizing the pulse shapes to make the gate robust against fluctuations of the interaction strength $J$ induced by the atomic motion. Finally, we perform numerical simulations that take atomic motion and finite Rydberg lifetimes into account for rubidium and cesium atoms and demonstrate Bell state fidelities that can exceed 99.9%, highlighting the feasibility and effectiveness of our scheme.

The structure of the paper is as follows. In Sec. 11, we discuss two different protocols for realizing entangling gates with resonant dipole-dipole interactions between Rydberg atoms in the limit $J/\Omega_o \to \infty$. In particular, the first one consists of two resonant laser $\pi$-pulses with a fast microwave pulse at constant detuning in between; the second requires a time modulation of the laser and microwave detunings, and is mathematically equivalent to a van der Waals protocol with time-dependent interaction strength. In Sec. III, we focus on the second protocol and lay out the numerical procedure employed to obtain the pulses that implement the CZ gate in the ideal case where no van der Waals interaction occurs between the Rydberg pair states. In Sec. IV, we consider rubidium and cesium atoms where the Rydberg states $|r_1\rangle$ and $|r_2\rangle$ are, respectively, $P$ and $S$ states with principal quantum numbers $n = 40, 50$. We compute their resonant dipole-dipole interaction strength $J$ and van der Waals interaction strengths $V_{11}, V_{12}, V_{22}$ at various distances, and repeat the GRAPE optimization to show that a qualitatively similar gate protocol exists in the presence of van der Waals forces. In Sec. V, we optimize the pulse robustness against fluctuations of the interatomic distance and find a stabilized protocol that significantly enhances gate fidelities when considering the coupling to the atomic motional state. In Sec. VI, we draw our conclusions and outline potential directions for future work.

## II. CZ GATES FROM RESONANT DIPOLE-DIPOLE INTERACTION

The Hamiltonian that describes the two four-level systems depicted in Fig. 8 reads

$$\frac{H(t)}{\hbar} = \frac{\Omega_o(t)}{2} \left( e^{i\varphi_o(t)} |1\rangle\langle r_1|_A + e^{i\varphi_o(t)} |1\rangle\langle r_1|_B + \text{h.c.} \right)$$
$$+ \frac{\Omega_{mw}(t)}{2} \left( e^{i\varphi_{mw}(t)} |r_1\rangle\langle r_2|_A + e^{i\varphi_{mw}(t)} |r_1\rangle\langle r_2|_B + \text{h.c.} \right)$$
$$+ J \left( |r_1 r_2\rangle\langle r_2 r_1| + \text{h.c.} \right), \tag{1}$$

where $A$ and $B$ label the two atoms, $\Omega_o$ and $\varphi_o$ are the amplitude and phase of the laser that couples the computational basis state $|1\rangle$ to the Rydberg state $|r_1\rangle$, $\Omega_{mw}$ and $\varphi_{mw}$ are the amplitude and phase of the microwave radiation that couples the two Rydberg states $|r_1\rangle$ and $|r_2\rangle$, and $J > 0$ is the strength of the dipolar exchange interaction. Such interaction is present in Rydberg states for which a dipole transition is allowed, e.g. an $s$ state and a $p$ state (cf. Sec. IV). The real Hamiltonian for the two atoms also includes van der Waals interaction terms of the form $V_{ij}|r_i r_j\rangle\langle r_i r_j|$, which we will neglect in this section and discuss at length in Sec. IV and Sec. V.

The most general maximally-entangling two-qubit gate realizable within this scheme is a CZ gate up to a single-qubit phase shift, which can be parameterized by an angle $\theta$ and can be written in the computational basis $\{|00\rangle,|01\rangle,|10\rangle,|11\rangle\}$ as

$$\mathrm{CZ}(\theta) = \mathrm{diag}\left(1, e^{i\theta}, e^{i\theta}, -e^{i2\theta}\right). \tag{2}$$

We now outline two ways for obtaining such two-qubit gate from the dynamics Eq. (1) when $J \gg \Omega_\mathrm{o}, |\Delta_\mathrm{o}|, \Omega_\mathrm{mw}, |\Delta_\mathrm{mw}|$, where $\Delta_\mathrm{o} = \frac{\mathrm{d}\varphi_\mathrm{o}}{\mathrm{d}t}$ and $\tilde{\Delta}_\mathrm{mw} = \frac{\mathrm{d}\varphi_\mathrm{mw}}{\mathrm{d}t}$. We postpone the discussion of gate protocols at finite $J$ to Sec. III B. In what follows, we switch to a description in terms of the detunings $\Delta_\mathrm{o}$ ($\Delta_\mathrm{mw}$) with respect to the optical (microwave) transition, by applying the unitary transformation $U = U_A \otimes U_B$, where $U_A = U_B = \mathrm{diag}(1, 1, e^{i\varphi_\mathrm{o}}, e^{i(\varphi_\mathrm{o}+\varphi_\mathrm{mw})})$. The time evolution of $|01\rangle$ (or $|10\rangle$) and $|11\rangle$ is governed by the Hamiltonians $H_{01}$ and $H_{11}$, depicted in Fig. 9. The flip-flop interaction only enters in $H_{11}$ and, for $J \gg \Omega_\mathrm{o}, |\Delta_\mathrm{o}|, \Omega_\mathrm{mw}, |\Delta_\mathrm{mw}|$, results in the states $\frac{1}{2}\left(|r_1 r_2\rangle + |r_2 r_1\rangle\right)$ and $|r_2 r_2\rangle$ being far off-resonant and effectively decoupled from the dynamics.

A simple protocol for realizing a CZ($\theta$) gate in this limit consists of three steps. First a resonant optical $\pi$-pulse transfers the single qubit population from $|1\rangle$ to $|r_1\rangle$, such that

$$U_1 |01\rangle = -i |0r_1\rangle, \quad U_1 |11\rangle = -|r_1 r_1\rangle. \tag{3}$$

A second off-resonant microwave pulse $U_2$ at constant detuning $\Delta_\mathrm{mw}$ is then applied to the atoms. Since the laser is off during this pulse, the state $|r_1 r_1\rangle$ does not evolve under $U_2$ (cf. Fig. 9). Hence, one can choose a pulse duration $T_\mathrm{mw} = 2\pi/\sqrt{\Delta_\mathrm{mw}^2 + \Omega_\mathrm{mw}^2}$ such that $|0r_1\rangle$ undergoes a complete Rabi oscillation $U_2 |0r_1\rangle = e^{i\varphi_\mathrm{mw}} |0r_1\rangle$, acquiring a phase $\pi\left(1 + \Delta_\mathrm{mw}/\sqrt{\Delta_\mathrm{mw}^2 + \Omega_\mathrm{mw}^2}\right)$ that can be adjusted by tuning $\Delta_\mathrm{mw}$. Setting $\Delta_\mathrm{mw} = \mp\Omega_\mathrm{mw}/\sqrt{3}$ yields $\varphi_\mathrm{mw} = \pm\pi/2$ and $\Omega_\mathrm{mw} T_\mathrm{mw} = \sqrt{3}\pi$. The combined result for these two pulses is

$$U_2 U_1 |01\rangle = -ie^{\pm i\frac{\pi}{2}} |0r_1\rangle, \quad U_2 U_1 |11\rangle = -|r_1 r_1\rangle. \tag{4}$$

Finally, a resonant optical $\pi$-pulse $U_3$ is applied to bring back the population to the computational basis:

$$U_3 U_2 U_1 |01\rangle = -e^{\pm i\frac{\pi}{2}} |0r_1\rangle, \quad U_3 U_2 U_1 |11\rangle = |r_1 r_1\rangle. \tag{5}$$

By comparing with Eq. (2), one can see that this pulse sequence realizes a CZ($\pm 3\pi/2$) gate in a time

$$\Omega_\mathrm{o} T = 2\pi + \frac{\sqrt{3}\pi\Omega_\mathrm{o}}{\Omega_\mathrm{mw}}. \tag{6}$$

As we discuss in App. A, when $\Omega_\mathrm{mw} \gg \Omega_\mathrm{o}$, the microwave pulse $U_2$ is much faster than the two laser pulses $U_1$ and $U_3$ and can be executed without turning off the laser with negligible effect on the gate fidelity. This condition is easily achievable with standard microwave sources [37]. Moreover, a proper time-modulation of the microwave phase can accommodate a finite dipole-dipole interaction strength $J$. However, we could not find a straightforward extension of this protocol that is stable upon the inclusion of van der Waals interactions $V_{i,j}$.

A natural question that emerges at this point is whether both optical and microwave couplings can be used at the same time to find an improved gate protocol. In the following, we present such a protocol and show that it can be systematically adapted to the case where van der Waals interactions are present and will be the focus of the rest of the main text. We describe below its simplest version when $J \gg \Omega_\mathrm{o}, |\Delta_\mathrm{o}|, \Omega_\mathrm{mw}, |\Delta_\mathrm{mw}|$ and give its physical interpretation. We assume laser and microwave fields to be always on with constant amplitudes $\Omega_\mathrm{o}$ and $\Omega_\mathrm{mw}$, and consider the microwave detuning $\Delta_\mathrm{mw} \gg \Omega_\mathrm{o}, \Delta_\mathrm{o}, \Omega_\mathrm{mw}$. In this limit the dynamics of $|01\rangle$ depicted in Fig. 9 can be further restricted to only two levels. To see this, we diagonalize $H_{01}$ in the subspace $\{|0r_1\rangle,|0r_2\rangle\}$ at first order in $\lambda = \Omega_\mathrm{mw}/2\Delta_\mathrm{mw}$. $H_{01}$ expressed in the dressed basis $\{|01\rangle,|0r_1\rangle + \lambda|0r_2\rangle,|0r_2\rangle - \lambda|0r_1\rangle\}$ reads

$$\frac{H_{01}}{h} = \begin{pmatrix} 0 & \frac{\Omega_\mathrm{o}}{2} & -\frac{\Omega_\mathrm{mw}\Omega_\mathrm{o}}{4\Delta_\mathrm{mw}} \\ \frac{\Omega_\mathrm{o}}{2} & -\Delta_\mathrm{o} + \frac{\Omega_\mathrm{mw}^2}{4\Delta_\mathrm{mw}} & 0 \\ -\frac{\Omega_\mathrm{mw}\Omega_\mathrm{o}}{4\Delta_\mathrm{mw}} & 0 & -\Delta_\mathrm{o} - \Delta_\mathrm{mw} - \frac{\Omega_\mathrm{mw}^2}{4\Delta_\mathrm{mw}} \end{pmatrix}. \tag{7}$$

The AC Stark shift induced on the dressed states $|0r_1\rangle + \lambda|0r_2\rangle$ and $|0r_2\rangle - \lambda|0r_1\rangle$ can be made finite by setting $\Delta_{\mathrm{mw}} = \tau\Omega_{\mathrm{mw}}^2$. If we now assume $\Omega_{\mathrm{mw}} \gg \Omega_{\mathrm{o}}, \Delta_{\mathrm{o}}$ the state $|0r_2\rangle$ decouples from the dynamics of $|01\rangle$, which is governed by the two-level Hamiltonian

$$\frac{H_{01}}{\hbar} = \begin{pmatrix} 0 & \frac{\Omega_{\mathrm{o}}}{2} \\ \frac{\Omega_{\mathrm{o}}}{2} & -\Delta_{\mathrm{o}} + \frac{1}{4\tau} \end{pmatrix}. \tag{8}$$

The same argument can be applied to $H_{11}$ upon replacing $\{|0r_1\rangle, |0r_2\rangle\}$ with $\left\{ \frac{1}{\sqrt{2}}(|1r_1\rangle + |r_11\rangle), \frac{1}{\sqrt{2}}(|1r_2\rangle + |r_21\rangle) \right\}$.

In the basis $\left\{ |11\rangle, \frac{1}{\sqrt{2}}(|1r_1\rangle + |r_11\rangle), |r_1r_1\rangle \right\}$ the resulting three-level Hamiltonian is

$$\frac{H_{11}}{\hbar} = \begin{pmatrix} 0 & \frac{\Omega_{\mathrm{o}}}{\sqrt{2}} & 0 \\ \frac{\Omega_{\mathrm{o}}}{\sqrt{2}} & -\Delta_{\mathrm{o}} + \frac{1}{4\tau} & \frac{\Omega_{\mathrm{o}}}{\sqrt{2}} \\ 0 & \frac{\Omega_{\mathrm{o}}}{\sqrt{2}} & -2\Delta_{\mathrm{o}} \end{pmatrix}. \tag{9}$$

The dynamics described by Eq. (8) and Eq. (9) is mathematically equivalent to the one of two three-level systems $\{|0\rangle, |1\rangle, |r\rangle\}$, where the state $|rr\rangle$ interacts with van der Waals force $V = -1/(2\tau)$, and where the detuning from the Rydberg transition is given by $\Delta = \Delta_{\mathrm{o}} - 1/(4\tau)$ i.e. the two-qubit gate scheme of Refs. [25]. The Hamiltonian for this system is

$$\frac{H(t)}{\hbar} = \frac{\Omega_{\mathrm{o}}}{2} \left( |1\rangle\langle r|_A + |1\rangle\langle r|_B + \mathrm{h.c.} \right) - \Delta(t) \left( |r\rangle\langle r|_A + |r\rangle\langle r|_B \right) + V(t) |rr\rangle\langle rr|. \tag{10}$$

In the prototypical van der Waals gate, the distance between the atoms and thus the van der Waals coefficient $V$ are usually constant during the gate operation. In our scheme, instead, a time-dependent $V$ simply corresponds to a time modulation of the microwave detuning $\Delta_{\mathrm{mw}}$. We will show in the next section that this additional control function provides a substantial speedup w.r.t. constant-$V$ van der Waals gates. In particular, we will demonstrate that the shortest gate time for a CZ operation with the Hamiltonian Eq. (10) is $T \simeq 5.98/\Omega_{\mathrm{o}}$, compared to the van der Waals gates execution time of $T \simeq 7/\Omega_{\mathrm{o}}$ for $V/\Omega_{\mathrm{o}} \simeq 1.3$ (see App. B) and $T \simeq 7.6/\Omega_{\mathrm{o}}$ for $V/\Omega_{\mathrm{o}} = \infty$ [26]. We will also show that the obtained protocol can be extended to finite $\Omega_{\mathrm{mw}}/\Omega_{\mathrm{o}}$ and $J/\Omega_{\mathrm{o}}$ with a slight increase of the gate execution time. We further observe that a time modulation of both $\Delta$ and $V$ in Eq. (10) is achieved via a time-dependent microwave detuning $\Delta_{\mathrm{mw}}$, since $\tau - \Delta_{\mathrm{mw}}/\Omega_{\mathrm{mw}}^2$, potentially simplifying the hardware requirements for realizing two-qubit gates within the scheme presented in this work.

## III. GATE SPEED OPTIMIZATION

In this section, we employ GRAPE to find the time-optimal protocol that realizes a CZ($\theta$) gate Eq. (2) within the scheme of Fig. 8. This gate maps the product state $|++\rangle$ to the Bell state

$$|\psi_\theta\rangle - \frac{1}{2} \left( |00\rangle + e^{i\theta}|01\rangle + e^{i\theta}|10\rangle - e^{2i\theta}|11\rangle \right), \tag{11}$$

such that the Bell state fidelity

$$F_{\mathrm{Bell}} = \left| \langle\psi_\theta| \mathcal{T} \exp\left( -\frac{i}{\hbar} \int_0^T H(t)\,\mathrm{d}t \right) |++\rangle \right|^2 = 1, \tag{12}$$

where $\tau$ exp is the time-ordered exponential. This quantity has been often used to benchmark and optimize the CZ gate [25, 38-40]. Since such gate is diagonal, $F_{\mathrm{Bell}} = 1$ is equivalent to $F = 1$, where F is the average gate fidelity [41]. We use the Bell state infidelity $C = 1 - F_{\mathrm{Bell}}$ as a cost function for the optimization, discretize time with a time step dt, and numerically minimize the cost function $C$ for a fixed total time $T$. The number of variational parameters for d$t = T/N$ is $kN + 1$, where k is the number of control functions and $N$ is the number of time steps. Such parameters are the values $f_i = f(t_i)$ of the unknown functions $f$ computed on the time-grid $t_i = (i + \frac{1}{2})\mathrm{d}t$, $i = 0,...N - 1$, and the Bell state angle $\theta$. We will always keep a

constant laser amplitude $\Omega_o$, which fixes our time units, and use $\varphi_o(t)$, $\varphi_{mw}(t)$ as control functions for $J/\Omega_o = \infty$ and $\varphi_o(t)$, $\varphi_{mw}(t)$, $\Omega_{mw}(t)$ for finite $J/\Omega_o$. We repeat the optimization for increasing $T$ until a time $T^*$ is found for which the cost function $C$ vanishes. The numerical minimization is performed using the method "L-BFGS-B" as implemented in the Python library SciPy [42]. To speed up this procedure we provide the SciPy routine with the gradient of the (time-discrete) cost function, which can be straightforwardly computed analytically. Moreover, when the microwave amplitude $\Omega_{mw}$ is also used as a variational control function, we set a lower bound $\Omega_{\mathrm{mw}}^{\mathrm{min}} = 0$ to ensure its positivity.

In the remainder of this section we employ GRAPE to first show that the scheme of Fig. 8, in the double limit $J/\Omega_o \to \infty$ and $\Omega_{mw}/\Omega_o \to \infty$ with $\triangle_{\mathrm{mw}} = \tau\Omega_{\mathrm{mw}}^2$, enables the realization of an exact $CZ(\theta)$ gate in a time $T \simeq 5.98/\Omega_o$. We then apply a modified version of the same method to find the time-optimal CZ gate protocol attainable with the Hamiltonian Eq. (1) and a finite dipole-dipole interaction strength $J$.

### A. Infinite $J/\Omega_o$

In Sec. II, we proved that the system of two dipole-dipole interacting four-level atoms depicted in Fig. 8 could be mapped to a system of two three-level atoms interacting via a time-dependent van der Waals force $V(t)$ and Rydberg-transition detuning $\triangle(t)$. This mapping is valid in the limits $J/\Omega_o \to \infty$ and $\Omega_{mw}/\Omega_o \to \infty$ with $\triangle_{\mathrm{mw}} = \tau\Omega_{\mathrm{mw}}^2$, and the relations between the parameters of the two models are $V(t) = -1/(2\tau(t))$ and $\triangle(t) = \triangle_o(t) - 1/(4\tau(t))$. We now perform a GRAPE optimization on the Hamiltonian Eq. (10) using the $\triangle(t)$, $V(t)$, and the CZ gate angle $\theta$ (cf. Eq. (2)) as variational parameters. The results of this optimization for $N = 100$ time steps are the solid black lines in Fig. 10. In Fig. 10(a), we plot the Bell state infidelity as a function of the dimensionless gate time $\Omega_o T$. The infidelity sharply drops to zero (within numerical precision) at the minimum time $T^*$ for which an exact CZ gate is realized, demonstrating the existence, under ideal conditions, of an exact $CZ(\theta)$ gate in a time $T \simeq 5.98/\Omega_o$. In Figs. 10(c) and 10(d), we plot the time dependence of the functions $f_1 = \triangle - V/2$ and $f_2 = -2V$ respectively for $\Omega_o T = 5.9$. These two functions have a direct interpretation in the dipole-dipole interacting gate scheme of Fig. 8, with $f_1 = \frac{\mathrm{d}\varphi_o}{\mathrm{d}t}$ and $f_2 = \Omega_{\mathrm{mw}}^2/\frac{\mathrm{d}\varphi_{mw}}{\mathrm{d}t}$.

Although this correspondence only holds when $\Omega_{mw}/\Omega_o = \infty$, GRAPE remarkably finds a qualitatively similar solution for finite $\Omega_{mw}/\Omega_o$. To show this, we minimize the Bell state infidelity obtained by evolving $|++\rangle$ with the Hamiltonian Eq. (1), using the laser and microwave phases $\varphi_o(t)$ and $\varphi_{mw}(t)$ as variational control functions. We enforce the constraint $J/\Omega_o = \infty$ by projecting out the states $|r_1 r_2\rangle, |r_2 r_1\rangle, |r_2 r_2\rangle$ from the dynamics (cf. Fig. 9(b)). We plot in Fig. 10(a) the minimum infidelity as a function of $\Omega_o T$ for different values of $\Omega_{mw}/\Omega_o$, and in Figs. 10(c) and 10(d) the functions $f_1 = \frac{\mathrm{d}\varphi_o}{\mathrm{d}t}$ and $f_2 = \Omega_{\mathrm{mw}}^2/\frac{\mathrm{d}\varphi_{mw}}{\mathrm{d}t}$ for $\Omega_o T = 5.9$, where $\frac{\mathrm{d}}{\mathrm{d}t}$ denotes a numerical derivative taken for a time step $T/N$ with $N = 300, 600$. We compare this result to the one obtained from the Hamiltonian Eq. (10) and observe a rapid convergence to the limit $\Omega_{mw}/\Omega_o = \infty$.

The finite-$\Omega_{mw}$ pulse depicted in Fig. 10(d) is discontinuous at $t/T \simeq 0.25, 0.75$. This is because the optimal $V(t) \propto 1/\frac{\mathrm{d}\varphi_{mw}}{\mathrm{d}t}$ vanishes, causing divergences in the optimal $\varphi_{mw}(t)$ and slow convergence of the result with the number of time steps $N$ (cf. Fig. 10(b)). Although this discontinuity in $1/\varphi_{mw}$ can be made arbitrarily small by reducing the time step $dt = T/N$, for too large $N$ the numerical optimization becomes unstable and eventually fails to produce a continuous solution. This issue is even more severe when the constraint $J/\Omega_o = \infty$ is relaxed. For this reason, for the GRAPE optimization at finite $J/\Omega_o$ below we introduce a regularizer in the cost function that penalizes discontinuous solutions.

### B. Finite $J/\Omega_o$

For the GRAPE optimization of the CZ gate protocol implemented via the Hamiltonian Eq. (1) we use the control functions $\varphi_o(t), \varphi_{mw}(t), \Omega_{mw}(t)$. As previously discussed in Sec. III A, this procedure is numerically unstable due to divergences in the optimal microwave phase $\varphi_{mw}$ and yields optimal pulses that do not converge to smooth curves with increasing N (decreasing time step dt). To overcome this issue we add a regularizer to the cost function that penalizes discontinuous solutions:

$$\mathcal{C}_\eta = 1 - F_{\mathrm{Bell}} + \eta \sum_f \int_0^T \left(\frac{\mathrm{d}f}{\mathrm{d}t}\right)^2 \mathrm{d}t \simeq 1 - F_{\mathrm{Bell}} + \eta \frac{N}{T} \sum_f \sum_{i=0}^{N-1} (f_{i+1} - f_i)^2, \qquad (13)$$

where $f = \varphi_o, \varphi_{mw}, \Omega_{mw}$ and $n$ is a small constant that we adjust as the exact gate at time $T^*$ is approached. Specifically, we initially set $\eta_0 - 10^{-7}$ for $T_0 < T^*$ and carry out the optimization until convergence. We then use the resulting optimal pulses as initial conditions for the optimization at $T_1 = T_0 + dT$, with $dT = 0.002/\Omega_o$, and reset $\eta_1 = \varepsilon C_0$, where $C_0$ is the Bell state infidelity obtained for the optimal solution at time $T_0$. By iterating this procedure we systematically reduce $\eta$ as $T^*$ is approached. We empirically find that the control functions obtained in this way are smooth and independent of the time step, as long as $\varepsilon \geq 10^{-3}$. Increasing $\varepsilon$ results in a larger $T^*$. Therefore, we tune $\varepsilon$ to the minimum value for which the optimal pulses are independent of the discretization scale dt.

The resulting pulses are plotted in Fig. 11 for several values of $J/\Omega_0$ and N = 200. In Fig. 11(a) we show the Bell state infidelity as a function of the total time $T$. The minimum gate execution time $T^*$ is $J$-dependent and decreases with increasing $J/\Omega_0$. As plotted in Fig. 12(a), it ranges from $T^* \simeq 6.28/\Omega_0$ for $J/\Omega_0 = 10$ to $T^* \simeq 6.09/\Omega_0$ for $J/\Omega_0 = 50$.

Figure 12(a) also displays the relative speed-up with respect to the execution time $T_V^* \simeq 7.61/\Omega_0$ of the time-optimal van der Waals gate [26], which goes from 18% up to 20% for $J/\Omega_0 = 10$ and 50, respectively. We observe that the divergences in the microwave phase $\varphi_{\mathrm{mw}}$ reported in Fig. 10(b) become smooth peaks in Fig. 11(c) at times $t/T \simeq 0.25, 0.75$ due to the regularizer.

Another important quantity to monitor is the time spent in the Rydberg manifold during the protocol, as it upper-bounds the infidelity due to the finite lifetime of the Rydberg states. It is given by

$$T^R = \frac{1}{2^2} \sum_q \int_0^T \langle q(t)| \left( \Pi_A + \Pi_B \right) |q(t)\rangle \, \mathrm{d}t, \qquad (14)$$

where $\Pi = |r_1\rangle\langle r_1| + |r_2\rangle\langle r_2|$ is the projector on the Rydberg subspace of one atom, the sum runs on all the computational basis states $|q\rangle = \{|00\rangle, |01\rangle, |10\rangle, |11\rangle\}$, and $|q(t)\rangle$ is the time evolution of these states under the optimal protocol. We plot $\Omega_0 T^R$ vs $J/\Omega_0$ in Fig. 12(b), demonstrating another substantial improvement ranging from 22% to 26% for $J/\Omega_0 = 10$ and 50 with respect to the van der Waals gate $T_V^R \simeq 2.95/\Omega_0$ [26] .

## IV. IMPLEMENTATION WITH ALKALI ATOMS

So far, we neglected the van der Waals interactions arising when the two atoms are in a Rydberg state. Such interactions take the form

$$H_{\mathrm{vdW}} = \sum_{i,j=1}^2 V_{ij} |r_i r_j\rangle\langle r_i r_j| \qquad (15)$$

and have to be included in the Hamiltonian Eq. (1). We do not expect the gate protocols depicted in Fig. 10 to be sensitive to the value of the interaction strengths $V_{12}(= V_{21})$, $V_{22}$. In fact, $J \gg \Omega_0$ and $|V_{12}|, |V_{22}| \gg \Omega_0$ have the same effect on the state $|11\rangle$, decoupling the states $|r_1 r_2\rangle, |r_2 r_2\rangle$ from its dynamics. On the contrary, $|V_{11}|$ has to be much smaller than $\Omega_0$ to avoid the decoupling of $|r_1 r_1\rangle$, which plays an active role in our scheme, as we discussed in Sec. III. Finally, we need to have $J \gg \Omega_0$ since the execution time of our protocol decreases with increasing $J/\Omega_0$ (cf. Fig. 12(a)). Combining these requirements we have the condition $J \gg \Omega_0 \gg |V_{11}|$.

The interactions strengths $J$ and $V_{11}$ depend on the interatomic distance $R$ as $J(R) \sim C_3/R^3$ and $V_{11}(R) \sim C_6/R^6$, respectively. Hence, we can adjust $J/V_{11} \sim (C_3/C_6)R^3$ by tuning R. However, $\Omega_0$ has to be as large as possible since the real gate time $T \propto 1/\Omega_0$. The maximum optical Rabi frequencies achievable in typical experimental conditions $\Omega_0/2\pi \simeq 1$ - 10 MHz thus set the range of the required dipole-dipole and van der Waals interactions to $J/2\pi \simeq 10$ - 100 MHz and $V/2\pi \simeq 0.1$ - 1 MHz. The $C_3$ and $C_6$ coefficients depend on the atomic species and

Table I. Resonant dipole-dipole and van der Waals interaction strengths $J$ and $V_{ij}$ between pairs of rubidium and cesium Rydberg states $|r_1\rangle = |nP_{3/2}, m_J = 3/2\rangle$ and $|r_2\rangle = |nS_{1/2}, m_J = 1/2\rangle$ with $n = 40$ and $n = 50$ at a distance $R$.

| | | **Rb** | | | | | | **Cs** | | | |
|---|---|---|---|---|---|---|---|---|---|---|---|
| $n$ | $R$ ($\mu$m) | $J/2\pi$ (MHz) | $V_{11}/J$ | $V_{12}/J$ | $V_{22}/J$ | $n$ | $R$ ($\mu$m) | $J/2\pi$ (MHz) | $V_{11}/J$ | $V_{12}/J$ | $V_{22}/J$ |
| 40 | 2.51 | 50 | 0.007 | 0.008 | 0.079 | 40 | 2.43 | 50 | -0.011 | 0.007 | 0.064 |
| 40 | 2.45 | 70 | 0.010 | 0.011 | 0.110 | 40 | 2.17 | 70 | -0.015 | 0.010 | 0.089 |
| 50 | 3.45 | 50 | 0.015 | 0.020 | 0.182 | 50 | 3.36 | 50 | -0.022 | 0.019 | 0.150 |
| 50 | 2.83 | 70 | 0.020 | 0.028 | 0.255 | 50 | 3.00 | 70 | -0.030 | 0.026 | 0.210 |

the quantum numbers of the Rydberg states. Their scaling with the principal quantum number $n$ is $C_3 \sim n^4$ and $C_6 \sim n^{11}$ [43]. Therefore, $J/|V_{11}|$ decreases with $n$ for fixed $R$. Given the Rydberg lifetime scaling $\tau \sim n^2$ at room tempera-

ture, we need to find a tradeoff between large $J/|V_{11}|$ and long $\tau$. Below, we focus on rubidium and cesium atoms with $n = 40$ and $n = 50$, which are among the most used atomic species in Rydberg atom experiments [8, 10, 44, 45]. In particular. we choose $|r_1\rangle = |nP_{3/2}, m_J = 3/2\rangle$ and $|r_2\rangle = |nS_{1/2}. m_J = 1/2\rangle$. This choice is motivated by the fact that the $C_6$ coefficient is smaller for P states than for S states. We calculate the interaction strengths $J, V_{ij}$ using the Python package PAIRINTERACTION [46]. Selected results that will be employed in what follows are reported in Table I. We note that $V_{11} < 0$ for cesium, a feature that makes the gate more robust against fluctuations in $R$, as we will show in Sec. V (cf. Fig. 13(a)).

We carried out the GRAPE optimization outlined in Sec. III B including the van der Waals interaction Eq. (15) in the Hamiltonian Eq. (1), with laser phase, and microwave amplitude and phase as control functions. We set $8 \leq J/\Omega_o \leq 14$ and the $V_{ij}$ listed in Table I. These interaction strengths enable Rabi frequencies $\Omega_o/2\pi \simeq 3.6\,6.3$ MHz for $J/2\pi = 50$ MHz and $\Omega_o/2\pi \simeq 5 - 8.75$ MHz for $J/2\pi = 70$ MHz. The time-optimal pulses resulting from this procedure are similar to the ones depicted in Fig. 11 and yield almost the same gate time. One example obtained for $J/\Omega_o = 10$ and the interaction strengths in the first row of Table I for rubidium Rydberg states is the dark grey line in Fig. 13.

## V. GATE ROBUSTNESS OPTIMIZATION

The main drawback of the experimentally realizable gate protocols of Sec. IV lies in the fact that the finite value of $J/\Omega_o$ and the inclusion of small but non-negligible van der Waals forces make them sensitive to fluctuations $\delta R$ of the interatomic distance, which induce variations of the interaction strengths $\delta J/J = -3\,\delta R/R$ and $\delta V/V = -6\,\delta R/R$. The same issue arises with standard van der Waals protocols away from the blockade regime. To overcome this limitation we employ a simple cost function for GRAPE that targets pulse shapes more stable against small changes of $R$. Upon defining $x = \delta R/R,$ such cost function has the form [47]

$$\mathcal{C} = 1 - \frac{1}{2x_{\mathrm{M}}} \int_{-x_{\mathrm{M}}}^{x_{\mathrm{M}}} \mathrm{d}x\, F_{\mathrm{Bell}}(x), \qquad (16)$$

where $x_m = \delta R_M/R$ is the maximum fluctuation and $F_{\mathrm{Bell}}(x)$ is the Bell state fidelity corresponding to a Hamiltonian with $J \cdot (1 - 3x)$ and $V_{ij} \cdot (1 - 6x)$.

For the numerical optimization, we discretize the integral in Eq. (16) on $K$ points and include the regularizer in Eq. (13) to ensure the smoothness of the optimal control functions. We use the time-optimal pulses obtained for a given set of parameters $J, V_{ij}$ as the initial condition for the optimization and allow for a slight increase of the gate time $T = T^* + \delta T^*$, where $T^*$ is the minimal time for realizing an exact CZ($\theta$) gate (cf. Fig. 11). Remarkably, we find that the resulting optimal pulses are independent of $x_M$ provided that $K$ is large enough. In practice, we set $x_M = 0.033$ and $K = 11$, and observe that increasing $x_M$ and $K$ yields the same pulses at a larger computational cost. The result is depicted in Fig. 13 for the set of interaction strengths $J, V_{ij}$ in the first row of Table I for rubidium (top) and cesium (bottom) Rydberg states. While the stabilized pulses (colored lines) are qualitatively similar to the time-optimal exact protocol (dark grey lines), their Bell state infidelity in Fig. 13(a) is one order of magnitude smaller over the whole interval $|\delta R/R| \leq 0.033$, excluding a small neighborhood of $\delta R/R = 0$. We notice that stabilized pulses for cesium produce smaller infidelities for a larger range of $\delta R/R,$ indicating that the attractive van der Waals interaction is beneficial for the gate stabilization (cf. bottom and top of Fig. 13(a)). The result significantly improves when a small increase in the gate time $\delta T^*$ is allowed.

Table II. Lifetimes for the Rydberg states $|r_1\rangle = |nP_{3/2}\rangle$ and $|r_2\rangle = |nS_{1/2}\rangle$ employed for the numerical simulations presented in Fig. 14 for rubidium (left) and cesium (right) [19].

| | Rb | | | Cs | |
|---|---|---|---|---|---|
| $n$ | $\Gamma_1^{-1}(\mu s)$ | $\Gamma_2^{-1}(\mu s)$ | $n$ | $\Gamma_1^{-1}(\mu s)$ | $\Gamma_2^{-1}(\mu s)$ |
| 40 | 151 | 60 | 40 | 118 | 69 |
| 50 | 313 | 126 | 50 | 239 | 141 |

## A. Gate performance with atomic motion

To benchmark the performance of the robust pulses such as those shown in Fig. 13, we carried out numerical simulations including the spontaneous Rydberg decay and the atomic motion induced by thermal fluctuations and photon recoil. For the case of a single-photon Rydberg transition considered below, photon recoil accounts for most of the gate infidelity if laser phase and amplitude noise are negligible [48]. For a two-photon transition, instead, the recoil can be suppressed by using counter-propagation beams. However, this introduces scattering from the intermediate state, which remains a major source of gate infidelity, which can be partly mitigated via pulse modulation [15]. We assume that the initial motional state is a thermal state $\rho \propto \exp\left(-\beta\hbar\omega_{\text{trap}} \sum_{\ell=A,B} a_\ell^\dagger a_\ell\right)$, where $\omega_{\text{trap}}$ is the trap frequency and $a$ ($a^\dagger$) are the annihilation (creation) operators of the motional modes. The tweezer traps are turned off during the gate, such that the vibrational modes' Hamiltonian reads

$$H_{\text{motion}} = \sum_{\ell=A,B} \frac{P_\ell^2}{2m}, \qquad (17)$$

where $P_\ell = ip_{\text{osc}}(a_A^\dagger - a_A)$, $p_{\text{osc}} = \sqrt{\hbar m\omega_{\text{trap}}/2}$, and $m$ is the atomic mass. The full model Hamiltonian is $H = H_{\text{motion}} + H_{\text{atom}} + H_{\text{int}} + H_{\text{decay}}$. The second term is the Hamiltonian of the atomic levels including the momentum transfer of the laser and microwave fields:

$$\frac{H_{\text{atom}}}{\hbar} = \frac{\Omega_o}{2} \sum_{\ell=A,B} \left(e^{i\varphi_o + i\eta_o(a_\ell + a_\ell^\dagger)} |1\rangle\langle r_1|_\ell + \text{h.c.}\right) + \frac{\Omega_{\text{mw}}}{2} \sum_{\ell=A,B} \left(e^{i\varphi_{\text{mw}} + i\eta_{\text{mw}}(a_\ell + a_\ell^\dagger)} |r_1\rangle\langle r_2|_\ell + \text{h.c.}\right), \qquad (18)$$

where $\eta_o = 2\pi x_{\text{osc}}/\lambda_o$ and $\eta_{\text{mw}} = 2\pi x_{\text{osc}}/\lambda_{\text{mw}}$ are the Lamb Dicke parameters for the optical and microwave transitions, with $x_{\text{osc}} = \sqrt{\hbar/(2m\omega_{\text{trap}})}$ and $\lambda_o(\lambda_{\text{mw}})$ the optical (microwave) transition wavelength. The third term is the interaction Hamiltonian where the dipole-dipole and van der Waals potentials are expanded at first order in the interatomic distance fluctuations $\Delta_{\text{mw}}\bar{R} = \bar{X}_A - \bar{X}_B = x_{\text{osc}}\left(a_A + a_A^\dagger - a_B - a_B^\dagger\right)$:

$$\frac{H_{\text{int}}}{\hbar} = J\left(1 - \frac{3(X_A - X_B)}{R}\right)(|r_1 r_2\rangle\langle r_2 r_1| + \text{h.c.}) + \sum_{i,j=1}^{2} V_{ij}\left(1 - \frac{6(X_A - X_B)}{R}\right)|r_i r_j\rangle\langle r_i r_j|. \qquad (19)$$

Finally, the last term models the finite lifetimes of the Rydberg states $|r_1\rangle, |r_2\rangle$ via a non-Hermitian Hamiltonian of the form

$$H_{\text{decay}} = -i\sum_{j=1}^{2} \frac{\Gamma_j}{2}\left(|r_j\rangle\langle r_j|_A + |r_j\rangle\langle r_j|_B\right), \qquad (20)$$

where the lifetimes $1/\Gamma_j$ are taken from Ref. [49] and listed in Table 11.

For the numerical simulations, we set the initial temperature to 2 $\mu$K and vary the trap frequency between 50 and 500 kHz. We used 8 vibrational modes per atom and verified that this number is sufficient to obtain converged results at all the considered trap frequencies. The results are shown in Fig. 14. We plot the Bell state infidelity as a function of $\omega_{\text{trap}}$ in Fig. 14(a) and Fig. 14(b) for rubidium and cesium, respectively. The values of $J$ and $V_{ij}$ are taken from the respective first rows of Table 1. The dark grey line is the exact protocol, whose execution times are $T_{\text{Rb}}^* \simeq 6.29/\Omega_o$ and $T_{\text{Cs}}^* \simeq 6.28/\Omega_o$, while the colored lines are the robust protocols with $T = T^* + \delta T^*$ (cf. Fig. 13). The latter considerably reduce the gate infidelity, especially at low trap frequencies. Remarkably, there exists an optimal trap frequency that minimizes the infidelity. This non-monotonic behavior is due to the competition between the fluctuating potentials Eq. (19), which worsens the gate performance as $\omega_{\text{trap}}$ decreases, and the photon recoil Eq. (18), which is known to improve the gate fidelity for decreasing $\omega_{\text{trap}}$ and for sufficiently small trap frequencies [38]. We note that cesium yields the smallest infidelities thanks to its larger mass, which reduces the oscillator length $x_{\text{osc}} \sim 1/\sqrt{m}$, the larger optical transition wavelength $\lambda_o$, which reduces the photon recoil, and the attractive P states van der Waals force (cf. Fig. 13(a)).

In Fig. 14(c) and Fig. 14(d), we plot the gate infidelities obtained from robust protocols with $\Omega_o\delta T^* = 0.1$ for all sets of interaction strengths in Table I and different optical Rabi frequencies $\Omega_o/2\pi \simeq 3.6 - 6.3$ MHz (blue and green markers) and $\Omega_o/2\pi \simeq 5 - 8.75$ MHz (orange and red markers). The total gate times, including the stabilization time $\delta T^*$, for such protocols range from $T \simeq 6.44/\Omega_o$ to $T \simeq 6.3/\Omega_o$ for the largest and smallest Rabi frequencies, respectively. The horizontal dashed lines are the fundamental limits set by the Rydberg decay, computed from the exact gate with $T = T^*$ neglecting the atomic motion. Interestingly, while the infidelity for rubidium decreases with increasing $\Omega_o$, it is non-monotonic for cesium, for which an optimal Rabi frequency exists. Moreover, higher $n$ Rydberg states perform slightly worse for Rubidium despite their longer Rydberg lifetime (cf. e.g. orange and red markers in Fig. 14(c)). This is due to the stronger van der Waals interaction to $V_{11} > 0$ that makes the gate less robust against atomic motion. On the contrary, for cesium, higher $n$ appears to improve the gate fidelity, implying that larger $|V_{11}|$ with $V_{11} < 0$ is beneficial for stabilizing the gate.

## VI. CONCLUSIONS AND OUTLOOK

We showed how resonant dipole-dipole interactions between Rydberg atoms can mediate two-qubit entangling operations. We introduced simple CZ gate protocols that are faster and less sensitive to finite Rydberg lifetimes than the standard schemes based on the van der Waals blockade effect. We generalized our protocol to realistic setups with rubidium and cesium atoms and developed a systematic method to stabilize the gate against fluctuations in the atomic positions, mitigating a main source of fidelity loss. We demonstrated that the stabilized protocols yield Bell state fidelities comparable to or larger than state-of-the-art experimental realizations of neutral-atom entangling gates.

In this work, we only considered experimental implementations with heavy alkali atoms, for which reliable atomic physics calculations can be carried out. Yet, alkaline-earth species such as strontium and ytterbium constitute promising candidates for realizing our scheme, respectively due to the attractive van der Waals interaction between Rydberg states in the singlet series for strontium, and the small predicted $C_6$ coefficients for states in the single series of ytterbium [50]. Another potential application of the gate protocol outlined in this paper is the realization of long-range gates, thanks to the slower decay with the distance of the resonant dipole-dipole potential with respect to to the commonly used van der Waals interaction. Finally, an interesting extension of this work is the generalization of our scheme to multi-qubit gates, which could natively be implemented on future neutral atom quantum computers.

## ACKNOWLEDGMENTS

We acknowledge useful discussions with Sebastian Blatt, Alexander Glätzle, Andreas Kruckenhauser, Matteo Magoni, Cosimo C. Rusconi, Pascal Scholl, and Rick van Bijnen. Giuliano Giudici acknowledges support from the European Union's Horizon Europe program under the Marie Sklodowska Curie Action TOPORYD (Grant No. 101106005). H.P. acknowledges support by the ERC Starting Starting Grant No. 101041435 (QARA), and the Austrian Science Fund (FWF): COE 1 and quantA. J.Z. acknowledges support from the BMBF through the program "Quantum technologies - from basic research to market" (SNAQC, Grant No. 13N16265), from the Max Planck Society (MPG) the Deutsche Forschungsgemeinschaft (DFG, German Research Foundation) under Germany's Excellence Strategy-EXC-2111-390814868, from the Munich Quantum Valley initiative as part of the High-Tech Agenda Plus of the Bavarian State Government, and from the BMBF through the programs MUNIQC-Atoms. J.Z. is co-founder and shareholder of PlanQC GmbH. This publication has also received funding under Horizon Europe programme HORIZON-CL4-2022-QUANTUM-02-SGA via the project 101113690 (PASQuanS2.1).

## Appendix A: Piecewise protocol

As discussed in the main text, the piecewise protocol is composed of two optical $\pi$-pulses separated by a slightly-detuned microwave, with $\Delta_{\mathrm{mw}} - \mp\Omega_{\mathrm{mw}}/\sqrt{3}$, and it yields an exact CZ($\pm3\pi/2$) gate in the limit of $J/\Omega_{\mathrm{o}} \to \infty$. The time required is $\Omega_{\mathrm{o}}T = 2\pi + \sqrt{3}\pi\,\Omega_{\mathrm{o}}/\Omega_{\mathrm{mw}}$, which, in the limit of large microwave driving ($\Omega_{\mathrm{mw}} \gg \Omega_{\mathrm{o}}$) yields a shorter time than the optimal van der Waals protocol. The time spent in the Rydberg state, however, is slightly less favorable: $\Omega_{\mathrm{o}}T^R = \pi + \sqrt{3}\pi\Omega_{\mathrm{o}}/\Omega_{\mathrm{mw}}$. Even in the large microwave driving limit, this is always larger than the van der Waals protocol ($\Omega_{\mathrm{o}}T^R \simeq 2.96$) [26].

We also note that there is an additional solution for $\Delta_{\mathrm{mw}} \sim J$, which yields a slightly lower execution time of $\Omega_{\mathrm{o}}T = 2\pi + \sqrt{2}\pi\,\Omega_{\mathrm{o}}/\Omega_{\mathrm{mw}}$. Physically, this detuning brings the state $|r_1 r_2\rangle + |r_2 r_1\rangle$ into resonance with $|r_1 r_1\rangle$, as opposed to the previous case where all dynamics from $|r_1 r_1\rangle$ are trivial (cf. Fig. 9). Similarly to the previous case, no phase modulation is necessary.

While the limit $J/\Omega_{\mathrm{o}} \to \infty$ is useful for gaining an analytical understanding, it is not the ideal regime for realizing fast gates in a practical setup. For finite interaction strength, we resort to optimal control techniques. Similarly to the main text, we use GRAPE to find an optimal modulation of the detuning $\Delta_{\mathrm{mw}}(t)$ for the intermediate pulse. As shown in Fig. 15(a), feasible solutions for each branch are found up to $J/\Omega_{\mathrm{mw}} \simeq 2$. The pulses consist of smooth oscillations around their asymptotic value (cf. Fig. 15(b)), with a frequency increasing with $J/\Omega_{\mathrm{mw}}$.

It is worth noting that for large microwave driving, one can still realize an approximate CZ gate without turning off the optical drive during the intermediate pulse. As shown in Figs. 15(c) and 15(d), by using the pulses found previously and simply adjusting the total laser pulse time T, one can achieve the desired gate with a fidelity improving both with $\Omega_{\mathrm{mw}}/\Omega_{\mathrm{o}}$ as well as $J/\Omega_{\mathrm{o}}$. Notably, the branch with $\Delta_{\mathrm{mw}} \sim J$ seems to have the highest fidelities compared to the other two. If the regime $J$, $\Omega_{\mathrm{mw}} \gg \Omega_{\mathrm{o}}$ is experimentally accessible, such a piecewise protocol can be appealing for practical implementations as it does not require any phase modulation on the laser beam.

Appendix **B**: Finite-*V* van der Waals protocols

In this section, we briefly discuss gate protocols using only a finite van der Waals interaction. The setup is identical to Ref. [25]. We consider a single Rydberg state $|r\rangle = |r_1\rangle$ for each atom and the laser beam couples it to the computational state $|1\rangle$. The total Hamiltonian is simply

$$\frac{H(t)}{\hbar} - \frac{\Omega_\circ(t)}{2} \left( e^{i\varphi_\circ(t)} |1\rangle\langle r|_A + e^{i\varphi_\circ(t)} |1\rangle\langle r|_B + \text{h.c.} \right) + V |rr\rangle\langle rr|, \tag{B1}$$

Following the analysis of Ref. [25], this Hamiltonian splits into two blocks, each one becoming a two-level system in the limit of $V/\Omega_\circ$ (the so-called blockade limit). This was exploited to perform a pulse optimization using GRAPE, achieving the optimal time of $T \simeq 7.61/\Omega_\circ$ [26].

Performing a similar optimization for finite V, we obtain several sets of solutions based on the initial condition, as shown in Fig. 16. Remarkably, numerically exact solutions can be found down to the regime of $V \simeq \Omega$. We also note that, contrarily to the asymptotic case, the pulse time does not necessarily correlate with the total time in the Rydberg manifold $T^R$. Similar pulses have been found in recent works designing Rydberg-dressed gate schemes [51].

[1] H. Bernien, S. Schwartz, A. Keesling, H. Levine, A. Omran, H. Pichler, S. Choi, A. S. Zibrov, M. Endres, M. Greiner, V. Vuletić, and M. D. Lukin, Probing many-body dynamics on a 51-atom quantum simulator, Nature 551, 579 (2017).

[2] A. Keesling, A. Omran, H. Levine, H. Bernien, H. Pichler, S. Choi, R. Samajdar, S. Schwartz, P. Silvi, S. Sachdev, P. Zoller, M. Endres, M. Greiner, V. Vuletić, and M. D. Lukin, Quantum Kibble-Zurek mechanism and critical dynamics on a programmable Rydberg simulator, Nature 568, 207 (2019).

[3] S. Ebadi, T. T. Wang, H. Levine, A. Keesling, G. Semeghini, A. Omran, D. Bluvstein, R. Samajdar, H. Pichler, W. W. Ho, S. Choi, S. Sachdev, M. Greiner, V. Vuletić, and M. D. Lukin, Quantum phases of matter on a 256-atom programmable quantum simulator, Nature 595, 327 (2021).

[4] G. Semeghini, H. Levine, A. Keesling, S. Ebadi, T. T. Wang, D. Bluvstein, R. Verresen, H. Pichler, M. Kalinowski, R. Samajdar, A. Omran, S. Sachdev, A. Vishwanath, M. Greiner, V. Vuletić, and M. D. Lukin, Probing Topological Spin Liquids on a Programmable Quantum Simulator, Science 374, 1242 (2021).

[5] R. Tao, M. Ammenwerth, F. Cyger, I. Bloch, and J. Zeiher, High-fidelity detection of large-scale atom arrays in an optical lattice (2024), arXiv:2309.04717 [physics.atowm-ph].

[6] F. Gyger, M. Ammenwerth, R. Tao, H. Timme, S. Snigirev, I. Bloch, and J. Zeiher, Continuous operation of large-scale atom arrays in optical lattices (2024), arXiv:2402.01994.

[7] H. J. Manetsch, G. Nomura, E. Bataille, K. H. Leung, X. Lv, and M. Endres, A tweezer array with 6100 highly coherent atomic qubits (2024), arXiv:2403.12021 [quant-ph].

[8] D. Bluvstein, S. J. Evered, A. A. Geim, S. H. Li, II. Zhou, T. Manovitz, S. Ebadi, M. Cain, M. Kalinowski, D. Ilangleiter, J. P. Bonilla Ataides, N. Maskara, I. Cong, X. Gao, P. Sales Rodriguez, T. Karolyshyn, G. Semeghini, M. J. Gullans, M. Greiner, V. Vuletić. and M. D. Lukin, Logical quantum processor based on reconfigurable atom arrays, Nature 626, 58 (2024).

[9] K. Barnes, P. Battaglino, B. J. Bloom, K. Cassella, R. Coxe, N. Crisosto, J. P. King, S. S. Kondov, K. Kotru, S. C. Larsen, J. Lauigan, B. J. Lester, M. McDonald, E. Megidish, S. Narayanaswami, C. Nishiguchi, R. Notermans, L. S. Peng, A. Ryou, T.-Y. Wu, and M. Yarwood, Assembly and Coherent Control of a Register of Nuclear Spin Qubits, Nature Communications 13, 2779 (2022).

[10] T. M. Graham, L. Phuttitarn, R. Chinnarasu, Y. Song, C. Poole, K. Jooya, J. Scott, A. Scott, P. Eichler, and M. Saffman, Midcircuit Measurements on a Single-Species Neutral Alkali Atom Quantum Processor, Phys. Rev. X 13, 041051 (2023).

[11] W. Huic, L. Li, N. Chen, X. Hu, Z. Jia, W. K. C. Sun, and J. P. Covey, Repetitive Readout and Real-Time Control of Nuclear Spin Qubits in 171Yb Atoms, PRX Quantum 4, 030337 (2023).

[12] M. A. Norcia, W. B. Cairncross, K. Barnes, P. Battaglino, A. Brown, M. O. Brown, K. Cassella, C.-A. Chen, R. Coxe, D. Crow, J. Epstein, C. Griger, A. M. W. Jones, H. Kim, J. M. Kindem, J. King, S. S. Kondov, K. Kotru, J. Lauigan, M. Li, M. Lu, E. Megidish, J. Marjanovic, M. McDonald, T. Mittiga, J. A. Muniz, S. Narayanaswami, C. Nishiguchi, R. Notermans, T. Paule, K. A. Pawlak, L. S. Peng, A. Ryou, A. Smull, D. Stack, M. Stone, A. Sucich, M. Urbanek, R. J. M. van de Veerdonk, Z. Vendeiro, T. Wilkason, T.-Y. Wu, X. Xie, X. Zhang, and B. J. Bloom, Midcircuit Qubit Measurement and Rearrangement in a 171Yb Atomic Array, Phys. Rev. X 13, 041034 (2023).

[13] D. Bluvstein, H. Levine, G. Semeghini, T. T. Wang, S. Ebadi, M. Kalinowski. A. Keesling, N. Maskara, H. Pichler, M. Greiner, V. Vuletić, and M. D. Lukin, A Quantum Processor Based on Coherent Transport of Entangled Atom Arrays, Nature 604, 451 (2022).

[14] II. Levine, D. Bluvstein, A. Keesling, T. T. Wang, S. Ebadi, G. Semeghini, A. Omran, M. Greiner, V. Vuletić, and M.

D. Lukin, Dispersive Optical Systems for Scalable Raman Driving of Hyperfine Qubits, Physical Review A 105, 032618 (2022).

[15] S. J. Evered, D. Bluvstein, M. Kalinowski, S. Ebadi, T. Manovitz, H. Zhou, S. H. Li, A. A. Geim, T. T. Wang, N. Maskara, H. Levine, G. Semeghini, M. Greiner, V. Vuletiċ. and M. D. Lukin, High-fidelity parallel entangling gates on a neutral-atom quantum computer, Nature 622, 268 (2023).

[16] T. M. Graham, Y. Song, J. Scott, C. Poole, L. Phuttitarn, K. Jooya, P. Eichler, X. Jiang, A. Marra, B. Grinkemeyer, M. Kwon, M. Ebert, J. Cherek, M. T. Lichtman, M. Gillette, J. Gilbert, D. Bowman, T. Ballance, C. Campbell, E. D. Dahl, O. Crawford, N. S. Blunt, B. Rogers, T. Noel, and M. Saffman. Multi-Qubit Entanglement and Algorithms on a Neutral-Atom Quantum Computer, Nature 604, 457 (2022).

[17] G. Unnikrishnan, P. Ilzhöfer, A. Scholz, C. Hölzl, A. Götzelmann, R. K. Gupta, J. Zhao, J. Krauter, S. Weber, N. Makki, H. P. Büchler. T. Pfau, and F. Meinert, Coherent Control of the Fine-Structure Qubit in a Single Alkaline-Earth Atom (2024), arXiv:2401.10679.

[18] S. Pucher, V. Klüsener, F. Spriestersbach, J. Geiger, A. Schindewolf, I. Bloch, and S. Blatt, Fine-Structure Qubit Encoded in Metastable Strontium Trapped in an Optical Lattice (2024), arXiv:2401.11054.

[19] A. Cao, W. J. Eckner, T. L. Yelin, A. W. Young, S. Jandura, L. Yan, K. Kim, G. Pupillo, J. Ye, N. D. Oppong, and A. M. Kaufman, Multi-Qubit Gates and 'Schrödinger Cat' States in an Optical Clock (2024), arxiv:2402.16289.

[20] R. Finkelstein, R. B.-S. Tsai, X. Sun, P. Scholl, S. Direkci, T. Gefen, J. Choi, A. L. Shaw, and M. Endres, Universal quantum operations and ancilla-based readout for tweezer clocks (2024), arXiv:2402.16220.

[21] S. Ma, A. P. Burgers, G. Liu, J. Wilson, B. Zhang, and J. D. Thompson, Universal Gate Operations on Nuclear Spin Qubits in an Optical Tweezer Array of 171Yb Atoms, Phys. Rev. X 12, 021028 (2022).

[22] S. Ma, G. Liu, P. Peng, B. Zhang, S. Jandura, J. Claes, A. P. Burgers, G. Pupillo, S. Puri, and J. D. Thompson, High-Fidelity Gates and Mid-Circuit Erasure Conversion in an Atomic Qubit, Nature 622, 279 (2023).

[23] M. Peper, Y. Li, D. Y. Knapp, M. Bileska, S. Ma, G. Liu, P. Peng, B. Zhang, S. P. Horvath, A. P. Burgers, and J. D. Thompson, Spectroscopy and modeling of 171Yb Rydberg states for high-fidelity two-qubit gates (2024), arXiv:2406.01482.

[24] D. Jaksch, J. I. Cirac, P. Zoller, S. L. Rolston, R. Côté, and M. D. Lukin, Fast Quantum Gates for Neutral Atoms, Phys. Rev. Lett. 85. 2208 (2000).

[25] H. Levine, A. Keesling, G. Semeghini, A. Omran, T. T. Wang, S. Ebadi, H. Bernien, M. Greiner, V. Vuletiċ, H. Pichler, and M. D. Lukin, Parallel Implementation of High-Fidelity Multiqubit Gates with Neutral Atoms, Phys. Rev. Lett. 123, 170503 (2019).

[26] S. Jandura and G. Pupillo, Time-Optimal Two- and Three-Qubit Gates for Rydberg Atoms, Quantum 6, 712 (2022).

[27] C. Fromonteil, D. Bluvstein, and H. Pichler, Protocols for Rydberg Entangling Gates Featuring Robustness against Quasistatic Errors, PRX Quantum 4, 020335 (2023).

[28] C. Fromonteil, R. Tricarico, F. Cesa, and H. Pichler, Hamilton-Jacobi-Bellman equations for Rydberg-blockade processes (2024), arXiv:2402.12956 [quant-ph].

[29] S. Jandura, J. D. Thompson, and G. Pupillo, Optimizing Rydberg Gates for Logical-Qubit Performance, PRX Quantum 4, 020336 (2023).

[30] L. Henriet, L. Reguin, A. Signoles, T. Lahaye, A. Browaeys, G.-O. Reymond, and C. Jurczak, Quantum Computing with Neutral Atoms, Quantum 4, 327 (2020).

[31] D. Yu, II. Wang, D. Ma, X. Zhao, and J. Qian, Adiabatic and high-fidelity quantum gates with hybrid rydberg-rydberg interactions, Optics Express 27, 23080 (2019).

[32] N. Khaneja, T. Reiss, C. Kehlet, T. Schulte-Herbrüggen, and S. J. Glaser, Optimal control of coupled spin dynamics: design of NMR pulse sequences by gradient ascent algorithms, Journal of Magnetic Resonance 172, 296 (2005).

[33] A. Garon, S. J. Glaser, and D. Sugny, Time-optimal control of SU(2) quantum operations, Phys. Rev. A 88, 043422 (2013).

[34] A. Smith, B. E. Anderson, H. Sosa-Martinez, C. A. Riofrio, I. H. Deutsch, and P. S. Jessen, Quantum Control in the Cs 6S1/2 Ground Manifold Using Radio-Frequency and Microwave Magnetic Fields, Phys. Rev. Lett. 111, 170502 (2013).

[35] B. E. Anderson, H. Sosa-Martinez, C. A. Riofrio, I. H. Deutsch, and P. S. Jessen, Accurate and Robust Unitary Transformations of a High-Dimensional Quantum System, Phys. Rev. Lett. 114, 240401 (2015).

[36] B. Riaz, C. Shuang, and S. Qamar, Optimal control methods for quantum gate preparation: a comparative study, Quantum Information Processing 18, 100 (2019).

[37] P. Scholl, H. J. Williams, G. Bornet, F. Wallner, D. Barredo, L. Henriet, A. Signoles, C. Hainaut, T. Franz, S. Geier, A. Tebben, A. Salzinger, G. Zürn, T. Lahaye, M. Weidemüller, and A. Browaeys, Microwave Engineering of Programmable XXZ Hamiltonians in Arrays of Rydberg Atoms, PRX Quantum 3, 020303 (2022).

[38] F. Robicheaux, T. M. Graham, and M. Saffman, Photon-recoil and laser-focusing limits to Rydberg gate fidelity, Phys. Rev. A 103, 022424 (2021).

[39] L. S. Theis. F. Motzoi, F. K. Wilhelm, and M. Saffman, High-fidelity Rydberg-blockade entangling gate using shaped, analytic pulses, Phys. Rev. A 94, 032306 (2016).

[40] T. M. Graham, M. Kwon, B. Grinkemeyer, Z. Marra, X. Jiang, M. T. Lichtman, Y. Sun, M. Ebert, and M. Saffman, Rydberg-Mediated Entanglement in a Two-Dimensional Neutral Atom Qubit Array, Phys. Rev. Lett. 123, 230501 (2019).

[41] L. H. Pedersen, N. M. Moller, and K. Molmer, Fidelity of quantum operations, Physics Letters A 367, 17 (2007).

[42] P. Virtanen, R. Gommers, T. E. Oliphant, M. Haberland, T. Reddy, D. Cournapeau, E. Burovski, P. Peterson, W. Weckesser, J. Bright, S. J. van der Walt, M. Brett, J. Wilson, K. J. Millman, N. Mayorov, A. R. J. Nelson, E. Jones, R. Kern. E. Larson, C. J. Carey, I. Polat, Y. Feng, E. W. Moore, J. VanderPlas, D. Laxalde, J. Perktold, R. Cimrman, I. Henriksen, E. A. Quintero, C. R. Harris, A. M. Archibald, A. H. Ribeiro, F. Pedregosa, P. van Mulbregt, and SciPy 1.0 Contributors, SciPy 1.0: Fundamental Algorithms for Scientific Computing in Python, Nature Methods 17, 261 (2020).

[43] C. S. Adams, J. D. Pritchard, and J. P. Shaffer, Rydberg atom quantum technologies, Journal of Physics B: Atomic, Molecular and Optical Physics 53, 012002 (2019).

[44] S. Anand, C. E. Bradley, R. White, V. Ramesh, K. Singh, and H. Bernien, A dual-species Rydberg array (2024), arXiv:2401.10325 [quant-ph].

[45] G. Bornet, G. Emperauger, C. Chen, F. Machado, S. Chern, L. Leclerc, B. Gély, D. Barredo, T. Lahaye, N. Y. Yao, and A. Browaeys, Enhancing a Many-body Dipolar Rydberg Tweezer Array with Arbitrary Local Controls (2024), arXiv:2402.11056 [quant-ph].

[46] S. Weber, C. Tresp, H. Menke, A. Urvoy, O. Firstenberg, H. P. Büchler, and S. Hofferberth, Calculation of Rydberg interaction potentials, Journal of Physics B: Atomic, Molecular and Optical Physics 50, 133001 (2017).

[47] N. Khaneja, T. Reiss, C. Kehlet, T. Schulte-Herbrüggen, and S. J. Glaser, Optimal control of coupled spin dynamics: design of nmr pulse sequences by gradient ascent algorithms, Journal of Magnetic Resonance 172, 296 (2005).

[48] R. B.-S. Tsai, X. Sun, A. L. Shaw, R. Finkelstein, and M. Endres, Benchmarking and linear response modeling of high-fidelity rydberg gates (2024), arXiv:2407.20184.

[49] I. I. Beterov, I. I. Ryabtsev, D. B. Tretyakov, and V. M. Entin, Quasiclassical calculations of blackbody-radiation-induced depopulation rates and effective lifetimes of Rydberg $nS$, $nP$, and $nD$ alkali-metal atoms with $n \leq 80$, Phys. Rev. A 79, 052504 (2009).

[50] C. L. Vaillant, M. P. A. Jones, and R. M. Potvliege, Long-range Rydberg-Rydberg interactions in calcium, strontium and ytterbium, Journal of Physics B: Atomic, Molecular and Optical Physics 45, 135004 (2012).

[51] V. Buchemmavari, S. Omanakuttan, Y.-Y. Jau, and I. Deutsch, Entangling quantum logic gates in neutral atoms via the microwave-driven spin-flip blockade, Phys. Rev. A 109, 012615 (2024).

**Claims**

1. Method (300) for performing a quantum gate on a pair of atomic particles (100) serving as qubits for quantum computing, comprising:

   illuminating (310) the pair of atomic particles with a first electromagnetic radiation such that in each atomic particle a first qubit state 11) is coupled to a first Rydberg state $|r_1\rangle$; and
   illuminating (320) the pair of atomic particles with a second electromagnetic radiation such that in each atomic particle the first Rydberg state $|r_1\rangle$ is coupled to a second Rydberg state $|r_2\rangle$, such that a dipole-dipole interaction is induced between the pair of atomic particles.

2. Method of claim 1, wherein the first electromagnetic radiation comprises laser radiation and the second electromagnetic radiation comprises microwave radiation.

3. Method of claim 1, wherein illuminating the pair of atomic particles with the first and the second electromagnetic radiation comprises:
   applying the first and the second electromagnetic radiation to the pair of atomic particles in form of at least two radiation pulses.

4. Method of claim 3, wherein the at least two radiation pulses are applied to the pair of atomic particles at least partially simultaneously.

5. Method of claims 1 to 4, wherein illuminating the pair of atomic particles with the first and the second electromagnetic radiation comprises:

determining a pulse duration for the first and the second electromagnetic radiation and one or more time-dependent pulse parameters, including one or more of a pulse amplitude, a pulse phase, a detuning; and modulating the first and the second electromagnetic radiation based on the determined one or more time-dependent pulse parameters during the pulse duration, such that the dipole-dipole interaction between the two atomic particles realizes the quantum gate for the pair of atomic particles.

6. Method of claim 5, wherein determining the time-dependent pulse parameters comprises:

determining the time-dependent pulse parameters based on optimizing a fidelity of the quantum gate; and / or determining the time-dependent pulse parameters based on optimizing a robustness of the quantum gate against inter-particle distance fluctuations of the pair of atomic particles.

7. Method of claim 6, wherein optimizing the robustness of the quantum gate against the inter-particle distance fluctuations of the pair of atomic particles further comprises:
optimizing the fidelity of the quantum gate in presence of fluctuations of a dipolar interaction strength and / or a van der Waals interaction strength for the pair of atomic particles induced by the inter-particle distance fluctuations of the pair of atomic particles.

8. Method of any of claims 5 to 7, wherein determining the time-dependent pulse parameters further comprises:
determining the time-dependent pulse parameters based on performing an iterative numerical optimization method, preferably a gradient ascent pulse engineering, GRAPE, optimization method.

9. Method of any of claims 1 to 8,

wherein the quantum gate is a two-qubit entangling gate; and / or
wherein the pair of atomic particles are part of a neutral atom quantum register formed by an array of optical traps for atomic particles inside a vacuum chamber.

10. Apparatus for performing a quantum gate on a pair of atomic particles (100) in a quantum register (512), comprising:

a laser source (705);
a microwave source (710);
a set of optical elements (715) configured to direct laser radiation generated by the laser source onto the pair of atomic particles;
a microwave antenna (720), coupled to the microwave source, and configured to illuminate the pair of atomic particles with microwave radiation generated by the microwave source, wherein the microwave source is configured to control a duration, an intensity, a detuning and / or a phase of the microwave radiation;
a laser modulator (725) configured to control a duration, an intensity, a detuning and / or a phase of the laser radiation directed to the pair of atomic particles;
a control unit (730) configured to control the laser modulator and the microwave source to illuminate the pair of atomic particles with modulated laser radiation and modulated microwave radiation to perform the quantum gate on the pair of atomic particles.

11. Apparatus of claim 10, wherein the control unit is further configured to control the laser modulator and the microwave source to perform the quantum gate by carrying out the steps to the method of any of claims 1 to 9.

12. Method (400) for quantum computing, comprising:

trapping (420) a plurality of atomic particles in an array of optical traps forming a quantum register of trapped particle qubits inside a vacuum chamber;
performing (430) a set of quantum gate operations of a quantum computing algorithm on a selected subset of the trapped particle qubits based on dipole-dipole interactions by performing the steps of the method of any of the claims 1 to 9; and
determining (440) a result of the quantum computing algorithm by measuring a state of at least the selected subset of trapped particle qubits.

**13.** Method for quantum computing of claim 12, further comprising:

obtaining (410) a set of instructions for performing the set of quantum gate operations of the quantum computing algorithm on the selected subset of the trapped particle qubits of the quantum register; and

outputting (450) data corresponding to the result of the quantum computing algorithm.

**14.** Method for quantum computing of claim 13,

wherein obtaining the set of instructions for performing the set of quantum gate operations of the quantum computing algorithm comprises obtaining the set of instructions from a remote user device via a network; and / or wherein outputting the data corresponding to the result of the quantum computing algorithm comprises sending, to the remote user device via the network, the data corresponding to the result of the quantum computing algorithm.

**15.** Neutral atom quantum computer (500) configured to operate a neutral atom quantum register (512) inside a vacuum chamber (510) to perform a quantum computing algorithm and comprising means to carry out the steps of the method of any of claims 12 to 14.

**Fig. 1**

(a)

$\text{Rb}$  $\Omega_{\text{o}} T^* = 6.29$

$1 - F_{\text{Bell}}$

$R = 2.51 \mu\text{m}$  $J/\Omega_{\text{o}} = 10$

$\text{Cs}$  $\Omega_{\text{o}} T^* = 6.28$

$1 - F_{\text{Bell}}$

$R = 2.43 \mu\text{m}$  $J/\Omega_{\text{o}} = 10$

$\delta R/R$

(b)

$\text{Rb}$

$\varphi_{\text{o}}$

$\text{Cs}$

$\varphi_{\text{o}}$

$t/T$

(c)

$\text{Rb}$

$\varphi_{\text{mw}}$

$\text{Cs}$

$\varphi_{\text{mw}}$

$t/T$

(d)

$\text{Rb}$

$\Omega_{\text{mw}}/\Omega_{\text{o}}$

$\text{Cs}$

$\Omega_{\text{mw}}/\Omega_{\text{o}}$

$t/T$

Fig. 3

400

410

Obtaining instructions for performing quantum gate operations of a quantum computing algorithm

420

Trapping a plurality of particles in an array of optical traps forming a quantum register of trapped particle qubits

430

Performing quantum gate operations on a selected subset of the trapped particle qubits based on dipole-dipole interactions

440

Determining a result of the quantum computing algorithm by measuring a state of selected subset of the trapped particle qubits

450

Outputting data corresponding to the result of the quantum computing algorithm

**Fig. 4**

**Fig. 5**

Fig. 6

**Fig. 7**

Figure 8. Schematic representation of the level scheme utilized in this work for realizing a CZ gate up to a local phase. A laser field with amplitude $\Omega_{\mathrm{o}}$ and phase $\varphi_{\mathrm{o}}$ couples the qubit state $|1\rangle$ to the Rydberg state $|r_1\rangle$. A microwave field with amplitude $\Omega_{\mathrm{mw}}$ and phase $\varphi_{\mathrm{mw}}$ couples the two Rydberg states $|r_1\rangle$ and $|r_2\rangle$ enabling a flip-flop interaction $J(|r_1 r_2\rangle\langle r_2 r_1| + \mathrm{h.c.})$ between the two atoms (cf. Eq. (1)). Field amplitudes and phases are time-dependent control functions.

Figure 9. Schematic representation of the two relevant blocks of the Hamiltonian Eq. (1) that encode the dynamics of the state $|01\rangle$ (a) and $|11\rangle$ (b), after the unitary transformation $U = U_A \otimes U_B$, with $U_A = U_B = \mathrm{diag}(1, e^{i\varphi_{\mathrm{o}}}, e^{i(\varphi_{\mathrm{o}}+\varphi_{\mathrm{mw}})})$ mapping laser and microwave phases into detunings $\Delta_{\mathrm{o}} = \frac{\mathrm{d}\varphi_{\mathrm{o}}}{\mathrm{d}t}$, $\Delta_{\mathrm{mw}} = \frac{\mathrm{d}\varphi_{\mathrm{mw}}}{\mathrm{d}t}$. Because of the symmetry $A \leftrightarrow B$ of the protocol, all antisymmetric states are not relevant for the time evolution of $|11\rangle$. For $J \gg \Omega_{\mathrm{o}}, |\Delta_{\mathrm{o}}|, \Omega_{\mathrm{mw}}, |\Delta_{\mathrm{mw}}|$ the states in the shaded dashed box in panel (b) are decoupled from the dynamics of $|11\rangle$.

Figure 10. (a) Bell state infidelity as a function of the dimensionless gate time $\Omega_o T$ obtained for the Hamiltonian Eq. (10) (black lines) and for the Hamiltonian Eq. (1) with $J/\Omega_o = \infty$ for different values of $\Omega_{mw}/\Omega_o$ (colored lines). In the latter case, the optimization is performed for two different time step sizes $dt = T/N$, i.e. $N = 300$ (dashed lines) and $N = 600$ (solid lines), while in the former case $N = 100$. (b) Optimal microwave phase obtained at finite $\Omega_{mw}$ for different values of $\Omega_{mw}/\Omega_o$ and for $\Omega_o T = 5.9$. (c)–(d) Comparison between the pulse shapes obtained for the Hamiltonian Eq. (10) (black lines) and for the Hamiltonian Eq. (1) with $J/\Omega_o = \infty$ (colored lines). The relations between the parameters of the two models are $\dot{\varphi}_o \equiv \frac{d\varphi_o}{dt} = \Delta - V/2$, $\dot{\varphi}_{mw} \equiv \frac{d\varphi_{mw}}{dt} = -\Omega_{mw}^2/(2V)$, and imply that $\varphi_{mw}$ diverges when $V$ vanishes (cf. panel (b)).

Figure 11. (a) Bell state infidelity as a function of the dimensionless gate time $\Omega_o T$ for several values of $J/\Omega_o$ ranging between 10 and 50 (cf. colorbar on the right of panel (d)). The number of time steps is set to $N = 200$ and the regularizing parameter $\varepsilon = 10^{-3}$ (cf. Eq. (13) and the text below). (b)–(d) Optimal laser phase $\varphi_o$, microwave phase $\varphi_{mw}$ and microwave amplitude $\Omega_{mw}$ at the time $T^*$ for which the time-optimal exact gate is found by the GRAPE optimization.

Figure 12. (a) Optimal CZ gate execution time for the pulses shown in Fig. 11 as a function of $J/\Omega_o$ (blue markers). The inset shows the relative speed-up $(T_V^* - T^*)/T_V^*$ w.r.t. the time-optimal van der Waals gate of Ref. [26] for which $\Omega_o T_V^* \simeq 7.61$ (red line). (b) Same as (a) with the time spent in the Rydberg subspace $T^R$ Eq. (14) in place of the gate execution time $T^*$.

Figure 13. (a) Bell state infidelity as a function of the relative fluctuation in interatomic distance $\delta R/R$. The dark grey line corresponds to the time-optimal exact gate obtained with the procedure outlined in Sec. III B. The colored lines correspond to the robust pulses obtained from the cost function Eq. (16) with $\Omega_o \delta T^* = 0, 0.1, 0.2$, where $\delta T^*$ is a slight increase of the time-optimal gate time $T^*$. Here $J/\Omega_o = 10$ and the interaction parameters are in the first row of Table I for rubidium (top) and cesium (bottom) Rydberg states. The horizontal red dashed line is $F_{\text{Bell}} = 0.999$. The control functions are discretized on a time grid of $N = 200$ points, while the integral in Eq. (13) is discretized on $K = 11$ points. The time-optimal pulses for this set of parameters have an execution time $T^* \sim 6.30/\Omega_o$. The pulse shapes for laser phase $\varphi_o$, microwave phase $\varphi_{\text{mw}}$ and amplitude $\Omega_{\text{mw}}$ are plotted in panel (b), (c) and (d), respectively.

Figure 14. (a)–(b) Bell state infidelity due to atomic motion and Rydberg decay as a function of the trap frequency $\omega_{\text{trap}}$ for the first row of the interaction parameters in Table I for rubidium (a) and cesium (b). The optical Rabi frequency is $\Omega_o/2\pi = 5\,\text{MHz}$. The dark grey line and the colored lines correspond to the exact time-optimal protocol and the robust protocols with a time increase $\delta T^*$, respectively. (c)–(d) Bell state infidelity as a function of the optical Rabi frequency $\Omega_o$ obtained from the robust protocols with $\Omega_o \delta T^* = 0.1$ for all the interaction parameters listed in Table I and a trap frequency $\omega_{\text{trap}}/2\pi = 100\,\text{kHz}$. The horizontal dashed lines are the infidelities due to Rydberg decay only.

Figure 15. (a) Optimal pulse times for the different branches of solutions for the intermediate pulse in the exact piecewise protocol (see inset). The grey lines correspond to the asymptotic values $\sqrt{2}\pi$ and $\sqrt{3}\pi$. (b) Pulse shape for the different branches of solutions at $J/\Omega_{\rm mw} = 8$ (star). (c)–(d) Bell state fidelity for the approximate piecewise protocol without turning off the laser (see inset). The different branches from (a)–(b) are shown as a function of the duration of the laser pulse $\Omega_{\rm o}T$, for (c) fixed $J/\Omega_{\rm mw}$ and (d) fixed $\Omega_{\rm mw}/\Omega_{\rm o}$. As both parameters are increased, the optimal time $T^*$ approaches $2\pi/\Omega_{\rm o}$ (red line).

Figure 16. (a) Optimal times for different sets of solutions at finite blockade strength $V$. The shortest pulse for each branch (highlighted with a star) is shown in (b). The dashed lines correspond to the values in the limit $V/\Omega_{\rm o} \to \infty$, previously found in Ref. [26].

Europäisches
Patentamt

European
Patent Office

Office européen
des brevets

# EUROPEAN SEARCH REPORT

**Application Number**

EP 24 21 2217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI RUI ET AL: "Proposal for practical Rydberg quantum gates using a native two-photon excitation", QUANTUM SCIENCE AND TECHNOLOGY, [Online] vol. 8, no. 3, 4 July 2023 (2023-07-04), pages 1-18, XP093267134, ISSN: 2058-9565, DOI: 10.1088/2058-9565/ace0d5 Retrieved from the Internet: URL:https://iopscience.iop.org/article/10.1088/2058-9565/ace0d5/pdf> [retrieved on 2025-04-07] * abstract * * page 1, line 1 - page 16, last line * ----- | 1-15 | INV. G06N10/20 G06N10/40 G06N10/70 |
| A | XUE MING ET AL: "High fidelity and robust controlled-Z gates implemented with Rydberg atoms via echoing rapid adiabatic passage", PHYSICAL REVIEW A, [Online] vol. 110, no. 3, 29 August 2024 (2024-08-29), pages 1-8, XP093267179, ISSN: 2469-9926, DOI: 10.1103/PhysRevA.110.032619 Retrieved from the Internet: URL:https://arxiv.org/pdf/2408.16274> [retrieved on 2025-04-07] * abstract * * page 1, left-hand column, line 1 - page 5, right-hand column, last line * ----- | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 8 April 2025 | Totir, Felix |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HENRIT et al.** Quantum computing with neutral atoms. *Quantum*, 2020, vol. 4, 327
- **S. J. EVERED et al.** High-fidelity parallel entangling gates on a neutral-atom quantum computer. *Nature*, vol. 622, 268-272
- **G. GIUDICI et al.** Fast entangling gates for Rydberg atoms via resonant dipole-dipole interaction. *arXiv:2411.05073 [quant-ph*, 07 November 2024
- **H. LEVINE et al.** Parallel Implementation of High-Fidelity Multiqubit Gates with Neutral Atoms. *PRL*, vol. 123, 170503
- **B. RIAZ**. Optimal control methods for quantum gate preparation: a comparative study. *Quantum Inf. Process.*, vol. 18, 100
- **M. D. LUKIN**. Probing many-body dynamics on a 51-atom quantum simulator. *Nature*, 2017, vol. 551, 579
- **M. D. LUKIN**. Quantum Kibble-Zurek mechanism and critical dynamics on a programmable Rydberg simulator. *Nature*, 2019, vol. 568, 207
- **M. D. LUKIN**. Quantum phases of matter on a 256-atom programmable quantum simulator. *Nature*, 2021, vol. 595, 327
- **M. D. LUKIN**. Probing Topological Spin Liquids on a Programmable Quantum Simulator. *Science*, 2021, vol. 374, 1242
- **R. TAO** ; **M. AMMENWERTH** ; **F. CYGER** ; **I. BLOCH** ; **J. ZEIHER**. High-fidelity detection of large-scale atom arrays in an optical lattice. *arXiv:2309.04717 [physics.atowm-ph*, 2024
- **F. GYGER** ; **M. AMMENWERTH** ; **R. TAO** ; **H. TIMME** ; **S. SNIGIREV** ; **I. BLOCH** ; **J. ZEIHER**. Continuous operation of large-scale atom arrays in optical lattices. *arXiv:2402.01994.*, 2024
- **H. J. MANETSCH** ; **G. NOMURA** ; **E. BATAILLE** ; **K. H. LEUNG** ; **X. LV** ; **M. ENDRES**. A tweezer array with 6100 highly coherent atomic qubits. *arXiv:2403.12021*, 2024
- **M. D. LUKIN**. Logical quantum processor based on reconfigurable atom arrays. *Nature*, 2024, vol. 626, 58
- **K. BARNES** ; **P. BATTAGLINO** ; **B. J. BLOOM** ; **K. CASSELLA** ; **R. COXE** ; **N. CRISOSTO** ; **J. P. KING** ; **S. S. KONDOV** ; **K. KOTRU** ; **S. C. LARSEN**. Assembly and Coherent Control of a Register of Nuclear Spin Qubits. *Nature Communications*, 2022, vol. 13, 2779

- **T. M. GRAHAM** ; **L. PHUTTITARN** ; **R. CHINNARASU** ; **Y. SONG** ; **C. POOLE** ; **K. JOOYA** ; **J. SCOTT** ; **A. SCOTT** ; **P. EICHLER** ; **M. SAFFMAN**. Midcircuit Measurements on a Single-Species Neutral Alkali Atom Quantum Processor. *Phys. Rev. X*, 2023, vol. 13, 041051
- **W. HUIC** ; **L. LI** ; **N. CHEN** ; **X. HU** ; **Z. JIA** ; **W. K. C. SUN** ; **J. P. COVEY**. *Repetitive Readout and Real-Time Control of Nuclear Spin Qubits in 71Yb Atoms, PRX Quantum*, 2023, vol. 4, 030337
- **M. A. NORCIA** ; **W. B. CAIRNCROSS** ; **K. BARNES** ; **P. BATTAGLINO** ; **A. BROWN** ; **M. O. BROWN** ; **K. CASSELLA** ; **C.-A. CHEN** ; **R. COXE** ; **D. CROW**. Midcircuit Qubit Measurement and Rearrangement in a 71Yb Atomic Array. *Phys. Rev. X*, 2023, vol. 13, 041034
- **M. D. LUKIN**. A Quantum Processor Based on Coherent Transport of Entangled Atom Arrays. *Nature*, 2022, vol. 604, 451
- **M. D. LUKIN**. Dispersive Optical Systems for Scalable Raman Driving of Hyperfine Qubits. *Physical Review A*, 2022, vol. 105, 032618
- **M. D. LUKIN**. High-fidelity parallel entangling gates on a neutral-atom quantum computer. *Nature*, 2023, vol. 622, 268
- **T. M. GRAHAM** ; **Y. SONG** ; **J. SCOTT** ; **C. POOLE** ; **L. PHUTTITARN** ; **K. JOOYA** ; **P. EICHLER** ; **X. JIANG** ; **A. MARRA** ; **B. GRINKEMEYER**. Multi-Qubit Entanglement and Algorithms on a Neutral-Atom Quantum Computer. *Nature*, 2022, vol. 604, 457
- **G. UNNIKRISHNAN** ; **P. ILZHÖFER** ; **A. SCHOLZ** ; **C. HÖLZL** ; **A. GÖTZELMANN** ; **R. K. GUPTA** ; **J. ZHAO** ; **J. KRAUTER** ; **S. WEBER** ; **N. MAKKI**. Coherent Control of the Fine-Structure Qubit in a Single Alkaline-Earth Atom. *arXiv:2401.10679.*, 2024
- **S. PUCHER** ; **V. KLÜSENER** ; **F. SPRIESTERSBACH** ; **J. GEIGER** ; **A. SCHINDEWOLF** ; **I. BLOCH** ; **S. BLATT**. Fine-Structure Qubit Encoded in Metastable Strontium Trapped in an Optical Lattice. *arXiv:2401.11054*, 2024
- **A. CAO** ; **W. J. ECKNER** ; **T. L. YELIN** ; **A. W. YOUNG** ; **S. JANDURA** ; **L. YAN** ; **K. KIM** ; **G. PUPILLO** ; **J. YE** ; **N. D. OPPONG**. Multi-Qubit Gates and 'Schrödinger Cat' States in an Optical Clock. *arxiv:2402.16289.*, 2024

- **R. FINKELSTEIN ; R. B.-S ; TSAI, X. SUN ; P. SCHOLL ; S. DIREKCI ; T. GEFEN ; J. CHOI ; A. L. SHAW ; M. ENDRES**. Universal quantum operations and ancilla-based readout for tweezer clocks. *arXiv:2402.16220.*, 2024
- **S. MA ; A. P. BURGERS ; G. LIU ; J. WILSON ; B. ZHANG ; J. D. THOMPSON**. Universal Gate Operations on Nuclear Spin Qubits in an Optical Tweezer Array of 71Yb Atoms. *Phys. Rev. X*, 2022, vol. 12, 021028
- **S. MA ; G. LIU ; P. PENG ; B. ZHANG ; S. JANDURA ; J. CLAES ; A. P. BURGERS ; G. PUPILLO ; S. PURI ; J. D. THOMPSON**. High-Fidelity Gates and Mid-Circuit Erasure Conversion in an Atomic Qubit. *Nature*, 2023, vol. 622, 279
- **M. PEPER ; Y. LI ; D. Y. KNAPP ; M. BILESKA ; S. MA ; G. LIU ; P. PENG ; B. ZHANG ; S. P. HORVATH ; A. P. BURGERS**. Spectroscopy and modeling of Yb Rydberg states for high-fidelity two-qubit gates. *arXiv:2406.01482.*, 2024
- **D. JAKSCH ; J. I. CIRAC ; P. ZOLLER ; S. L. ROLSTON ; R. CÔTÉ ; M. D. LUKIN**. Fast Quantum Gates for Neutral Atoms. *Phys. Rev. Lett.*, 2000, vol. 85, 2208
- **H. PICHLER ; M. D. LUKIN**. Parallel Implementation of High-Fidelity Multiqubit Gates with Neutral Atoms. *Phys. Rev. Lett.*, 2019, vol. 123, 170503
- **S. JANDURA ; G. PUPILLO**. Time-Optimal Two- and Three-Qubit Gates for Rydberg Atoms. *Quantum*, 2022, vol. 6, 712
- **C. FROMONTEIL ; D. BLUVSTEIN ; H. PICHLER**. Protocols for Rydberg Entangling Gates Featuring Robustness against Quasistatic Errors. *PRX Quantum*, 2023, vol. 4, 020335
- **C. FROMONTEIL ; R. TRICARICO ; F. CESA ; H. PICHLER**. Hamilton-Jacobi-Bellman equations for Rydberg-blockade processes. *arXiv:2402.12956 [quant-ph*, 2024
- **S. JANDURA ; J. D. THOMPSON ; G. PUPILLO**. Optimizing Rydberg Gates for Logical-Qubit Performance. *PRX Quantum*, 2023, vol. 4, 020336
- **L. HENRIET ; L. REGUIN ; A. SIGNOLES ; T. LAHAYE ; A. BROWAEYS ; G.-O. REYMOND ; C. JURCZAK**. Quantum Computing with Neutral Atoms. *Quantum*, 2020, vol. 4, 327
- **D. YU ; II. WANG ; D. MA ; X. ZHAO ; J. QIAN**. Adiabatic and high-fidelity quantum gates with hybrid rydberg-rydberg interactions. *Optics Express*, 2019, vol. 27, 23080
- **N. KHANEJA ; T. REISS ; C. KEHLET ; T. SCHULTE-HERBRÜGGEN ; S. J. GLASER**. Optimal control of coupled spin dynamics: design of NMR pulse sequences by gradient ascent algorithms. *Journal of Magnetic Resonance*, 2005, vol. 172, 296
- **A. GARON ; S. J. GLASER ; D. SUGNY**. Time-optimal control of SU(2) quantum operations. *Phys. Rev. A*, 2013, vol. 88, 043422
- **A. SMITH ; B. E. ANDERSON ; H. SOSA-MARTINEZ ; C. A. RIOFRIO ; I. H. DEUTSCH ; P. S. JESSEN**. Quantum Control in the Cs 6S1/2 Ground Manifold Using Radio-Frequency and Microwave Magnetic Fields. *Phys. Rev. Lett.*, 2013, vol. 111, 170502
- **B. E. ANDERSON ; H. SOSA-MARTINEZ ; C. A. RIOFRIO ; I. H. DEUTSCH ; P. S. JESSEN**. Accurate and Robust Unitary Transformations of a High-Dimensional Quantum System. *Phys. Rev. Lett.*, 2015, vol. 114, 240401
- **B. RIAZ ; C. SHUANG ; S. QAMAR**. Optimal control methods for quantum gate preparation: a comparative study. *Quantum Information Processing*, 2019, vol. 18, 100
- **P. SCHOLL ; H. J. WILLIAMS ; G. BORNET ; F. WALLNER ; D. BARREDO ; L. HENRIET ; A. SIGNOLES ; C. HAINAUT ; T. FRANZ ; S. GEIER**. Microwave Engineering of Programmable XXZ Hamiltonians in Arrays of Rydberg Atoms. *PRX Quantum*, 2022, vol. 3, 020303
- **F. ROBICHEAUX ; T. M. GRAHAM ; M. SAFFMAN**. Photon-recoil and laser-focusing limits to Rydberg gate fidelity. *Phys. Rev. A*, 2021, vol. 103, 022424
- **L. S. THEIS ; F. MOTZOI ; F. K. WILHELM ; M. SAFFMAN**. High-fidelity Rydberg-blockade entangling gate using shaped, analytic pulses. *Phys. Rev. A*, 2016, vol. 94, 032306
- **T. M. GRAHAM ; M. KWON ; B. GRINKEMEYER ; Z. MARRA ; X. JIANG ; M. T. LICHTMAN ; Y. SUN ; M. EBERT ; M. SAFFMAN**. Rydberg-Mediated Entanglement in a Two-Dimensional Neutral Atom Qubit Array. *Phys. Rev. Lett.*, 2019, vol. 123, 230501
- **L. H. PEDERSEN ; N. M. MOLLER ; K. MOLMER**. Fidelity of quantum operations. *Physics Letters A*, 2007, vol. 367, 17
- **P. VIRTANEN ; R. GOMMERS ; T. E. OLIPHANT ; M. HABERLAND ; T. REDDY ; D. COURNAPEAU ; E. BUROVSKI ; P. PETERSON ; W. WECKESSER ; J. BRIGHT**. SciPy 1.0 Contributors, SciPy 1.0: Fundamental Algorithms for Scientific Computing in Python. *Nature Methods*, 2020, vol. 17, 261
- **C. S. ADAMS ; J. D. PRITCHARD ; J. P. SHAFFER**. Rydberg atom quantum technologies. *Journal of Physics B: Atomic, Molecular and Optical Physics*, 2019, vol. 53, 012002
- **S. ANAND ; C. E. BRADLEY ; R. WHITE ; V. RAMESH ; K. SINGH ; H. BERNIEN**. A dual-species Rydberg array. *arXiv:2401.10325 [quant-ph].*, 2024
- **G. BORNET ; G. EMPERAUGER ; C. CHEN ; F. MACHADO ; S. CHERN ; L. LECLERC ; B. GÉLY ; D. BARREDO ; T. LAHAYE ; N. Y. YAO**. Enhancing a Many-body Dipolar Rydberg Tweezer Array with Arbitrary Local Controls. *arXiv:2402.11056 [quant-ph].*, 2024

- **S. WEBER ; C. TRESP ; H. MENKE ; A. URVOY ; O. FIRSTENBERG ; H. P. BÜCHLER ; S. HOFFER-BERTH**. Calculation of Rydberg interaction potentials. *Journal of Physics B: Atomic, Molecular and Optical Physics*, 2017, vol. 50, 133001

- **N. KHANEJA ; T. REISS ; C. KEHLET ; T. SCHULTE-HERBRÜGGEN ; S. J. GLASER**. Optimal control of coupled spin dynamics: design of nmr pulse sequences by gradient ascent algorithms. *Journal of Magnetic Resonance*, 2005, vol. 172, 296

- **R. B.-S. TSAI ; X. SUN ; A. L. SHAW ; R. FINKELSTEIN ; M. ENDRES**. Benchmarking and linear response modeling of high-fidelity rydberg gates. *arXiv:2407.20184*, 2024

- **I. I. BETEROV ; I. I. RYABTSEV ; D. B. TRETYAKOV ; V. M. ENTIN**. Quasiclassical calculations of black-body-radiation-induced depopulation rates and effective lifetimes of Rydberg nS, nP, and nD alkali-metal atoms with $n \leq 80$. *Phys. Rev. A*, 2009, vol. 79, 052504

- **C. L. VAILLANT ; M. P. A. JONES ; R. M. POTVLIEGE**. Long-range Rydberg-Rydberg interactions in calcium, strontium and ytterbium. *Journal of Physics B: Atomic, Molecular and Optical Physics*, 2012, vol. 45, 135004

- **V. BUCHEMMAVARI ; S. OMANAKUTTAN ; Y.-Y. JAU ; I. DEUTSCH**. Entangling quantum logic gates in neutral atoms via the microwave-driven spin-flip blockade. *Phys. Rev. A*, 2024, vol. 109, 012615